Europäisches Patentamt

European Patent Office

Office européen des brevets

(19)

(11) EP 1 517 064 A2

## (12) EUROPEAN PATENT APPLICATION

(43) Date of publication:
23.03.2005 Bulletin 2005/12

(51) Int Cl.⁷: $F16H\ 3/12$

(21) Application number: 04020644.3

(22) Date of filing: 31.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 19.09.2003 JP 2003329003
30.04.2004 JP 2004135994

(71) Applicant: Nissan Motor Co., Ltd.
Yokohama-shi, Kanagawa 221-0023 (JP)

(72) Inventors:
• Yoshino, Masashi
Yamato-shi Kanagawa 242-0006 (JP)
• Hara, Tomoyuki
Isehara-shi Kanagawa 259-1136 (JP)

(74) Representative: Weber, Joachim, Dr.
Hoefer & Partner
Patentanwälte
Gabriel-Max-Strasse 29
81545 München (DE)

### (54) Automotive power transmission with synchromesh mechanism

(57) In an automotive power transmission, there is provided a synchronizing support force generating mechanism that induces a relative rotation between a synchronizing hub (9) and a balk ring (7) when, upon shifting of a coupling sleeve (6) toward the balk ring (7), a cone surface (7a) of the balk ring (7) is brought into frictional contact with a cone surface of a clutch gear (3) to produce a friction torque therebetween, and converts a circumferential force produced as a result of the relative rotation between the synchronizing hub (9) and the balk ring (7) to an axially applied synchronizing support force with which the balk ring (7) is pressed against the clutch gear (3).

# FIG.1

EP 1 517 064 A2

**Description**

BACKGROUND OF THE INVENTION

1. Field of the Invention

The present invention relates in general to automotive power transmissions and more particularly to the automotive power transmissions of a type that is equipped with a synchromesh mechanism. More specifically, the present invention is concerned with an improvement in the synchromesh mechanism employed in the automotive power transmission.

2. Description of the Related Art

Japanese Laid-open Patent Application (Tokkaihei) 6-33952 and Japanese Laid-open Utility Model Application (Jikkaihei) 6-8824 show an automotive power transmission equipped with a synchromesh mechanism (or synchronizer). The power transmission comprises generally a coupling sleeve, a synchronizing hub, a balk ring and a clutch gear which are coaxially arranged. That is, when, upon movement of a shift lever by a driver, the coupling sleeve is axially moved toward the balk ring, chamfered edges of these elements are brought into contact with each other thereby stopping movement of the coupling sleeve. During the axial movement of the coupling sleeve, a cone surface of the balk ring is brought into contact with a cone surface of the clutch gear thereby to produce a friction torque (viz., synchronizing force) inducing rotation of the balk ring and synchronizing hub at the same speed.

SUMMARY OF THE INVENTION

In the synchromesh mechanism of the above-mentioned type, the friction torque (viz., synchronizing force) produced upon intimate contact of the balk ring cone surface with the clutch gear cone surface is entirely and directly transmitted to the coupling sleeve and thus to the shift lever. This direct transmission of the friction torque to the shift lever inevitably increases the force against which the driver has to manipulate the shift lever for a gear change. Furthermore, in a semi-automatic power transmission wherein movement of the coupling sleeve for the gear change is carried out by an electric power with a clutch kept disengaged, a high power electric actuator has to be used, which however brings about a bulky and highly-cost construction of the transmission.
It is therefore an object of the present invention to provide an automotive power transmission with a synchromesh mechanism, which is free of the above-mentioned drawbacks.
According to the present invention, there is provided an automotive power transmission with a synchromesh mechanism, which can effectively reduce a peak value of an operation load needed for moving the coupling sleeve to achieve a gear change.

According to the present invention, there is provided, in an automotive power transmission, a synchronizing support force generating mechanism that induces a relative rotation between a synchronizing hub and a balk ring when, upon shifting of a coupling sleeve toward the balk ring, a balk ring cone surface and a clutch gear cone surface frictionally contact to produce a friction torque, and converts a circumferential force produced as a result of the relative rotation between the synchronizing hub and the balk ring to an axially applied synchronizing support force with which the balk ring is pressed against the clutch gear.
In accordance with a first aspect of the present invention, there is provided an automotive power transmission with a synchromesh mechanism, which comprises a transmission rotation shaft; a synchronizing hub coaxially disposed about the transmission rotation shaft through a spline connection, thereby rotate therewith about an axis of the transmission rotation shaft; a coupling sleeve coaxially disposed about the synchronizing hub through a spline connection, thereby rotate therewith about the axis of the transmission rotation shaft; a speed gear rotatably disposed about the transmission rotation shaft; a clutch gear tightly and coaxially disposed on the speed gear to rotate therewith, clutch gear having a clutch gear cone surface; a balk ring arranged between the clutch gear and the coupling sleeve, the balk ring having a balk ring cone surface that is intimately contactable with the clutch gear cone surface, the balk ring having key grooves; insert keys held by the coupling sleeve to move therewith, each insert key having one end that is engaged with one of the key grooves of the balk ring to induce an integral rotation of the coupling sleeve with the balk ring when the coupling sleeve is axially shifted toward the balk ring; and a synchronizing support force generating mechanism that induces a relative rotation between the synchronizing hub and the balk ring when, upon shifting of the coupling sleeve toward the balk ring, the balk ring cone surface is brought into frictional contact with the clutch gear cone surface to produce a friction torque therebetween, and converts a circumferential force produced as a result of the relative rotation between the synchronizing hub and the balk ring to an axially applied synchronizing support force with which the balk ring is pressed against the clutch gear.
In accordance with a second aspect of the present invention, there is provided an automotive power transmission with a synchromesh mechanism, which comprises a transmission rotation shaft; a synchronizing hub coaxially disposed about the transmission rotation shaft through a spline connection, thereby rotate therewith about an axis of the transmission rotation shaft; a coupling sleeve coaxially disposed about the synchronizing hub through a spline connection, thereby rotate therewith about the axis of the transmission rotation shaft; a speed gear rotatably disposed about the transmission rotation shaft; a clutch gear tightly and coaxially disposed on the speed gear to rotate therewith, clutch gear having a clutch gear cone surface; a balk ring arranged between the clutch gear and the coupling sleeve, the balk ring having a balk ring cone surface that is intimately contactable with the clutch gear cone surface, the balk ring having key grooves; insert keys held by the coupling sleeve to move therewith, each insert key having one end that is engaged with one of the key grooves of the balk ring to induce an integral rotation of the coupling sleeve with the balk ring when the coupling sleeve is axially shifted toward the balk ring; a synchronizing support force generating mechanism that induces a relative rotation between the synchronizing hub and the balk ring when, upon shifting of the coupling sleeve toward the balk ring, the balk ring cone surface is brought into frictional contact with the clutch gear cone surface to produce a friction torque therebetween, and converts a circumferential force produced as a result of the relative rotation between the synchronizing hub and the balk ring to an axially applied synchronizing support force with which the balk ring is pressed against the clutch gear and a return mechanism that forces the balk ring to return to a rest position separating the balk ring cone surface from the clutch gear cone surface when the coupling sleeve is returned to its neutral position or spline teeth of the coupling sleeve are fully engaged with spline teeth of the clutch gear.

BRIEF DESCRIPTION OF THE DRAWINGS

Fig. 1 is a sectional view of a synchromesh mechanism employed in a first embodiment of the present invention, at a part where an insert key is shown;
Fig. 2 is a view similar to Fig. 1, but showing a part where a return key is shown;
Fig. 3A is a side view of a first balk ring employed in the synchromesh mechanism in the first embodiment;
Fig. 3B is a front view of the first balk ring of Fig. 3A;
Fig. 4A is a side view of a synchronizing hub employed in the synchromesh mechanism in the first embodiment;
Fig. 4B is a front view of the synchronizing hub of Fig. 4A;
Fig. 5A is a perspective view of a synchronizing support force generating mechanism employed in the synchromesh mechanism in the first embodiment, at a part where the first balk ring is arranged;
Fig. 5B is a perspective of the synchronizing support force generating mechanism at a part where the synchronizing hub is arranged;
Fig. 5C is a perspective view of a return mechanism employed in the first embodiment, at a part where a second balk ring is arranged;

Fig. 6 is a time chart depicting the characteristics of operation load needed by a coupling sleeve for achieving a gear change, in case of the first embodiment of the present invention;
Figs. 7A and 7B are schematic illustrations depicting a mechanism for generating a synchronizing support force in case of the first embodiment;
Fig. 8 is a sectional view of a synchromesh mechanism employed in a second embodiment of the present invention, at a part where an insert key is shown;
Fig. 9 is a view similar to Fig. 8, but showing a part where a return key is shown;
Fig. 10A is a side view of a first balk ring employed in the synchromesh mechanism in the second embodiment;
Fig. 10B is a front view of the first balk ring of Fig. 10A;
Fig. 11A is a side view of a synchronizing hub employed in the synchromesh mechanism in the second embodiment;
Fig. 11B is a front view of the synchronizing hub of Fig. 11A;
Fig. 12 is a perspective partial view of an essential portion of the synchromesh mechanism of the second embodiment;
Figs. 13A and 13B are schematic illustrations depicting a mechanism for generating a synchronizing support force in case of the second embodiment;
Fig. 14 is a sectional view of a synchromesh mechanism employed in a third embodiment of the present invention, at a part where a synchronizing support force generating mechanism is arranged;
Figs. 15A and 15B are side views of the synchromesh mechanism employed in the third embodiment, showing different operation conditions of the mechanism respectively;
Fig. 16 is an exploded perspective partial view of a synchronizing support force generating mechanism employed in the third embodiment;
Fig. 17 is a sectional view of a synchromesh mechanism employed in a fourth embodiment of the present invention, at a part where a synchronizing support force generating mechanism is arranged;
Figs. 18A and 18B are side views of the synchromesh mechanism employed in the fourth embodiment, showing different operation conditions of the mechanism respectively;
Fig. 19 is an exploded perspective partial view of the synchronizing support force generating mechanism employed in the fourth embodiment;
Fig. 20 is a view similar to Fig. 19, but showing a modification of the synchronizing support force generating mechanism employed in the fourth embodiment;
Fig. 21 is a sectional view of a synchromesh mechanism employed in a fifth embodiment of the present invention, at a part where a return mechanism is arranged;

Fig. 22A is a side view of a first balk ring employed in the synchromesh mechanism in the fifth embodiment;

Fig. 22B is a front view of the first balk ring of Fig. 22A;

Fig. 23A is a side view of a synchronizing hub employed in the synchromesh mechanism in the fifth embodiment;

Fig. 23B is a front view of the synchronizing hub of Fig. 23A;

Fig. 24 is a sectional view of a synchromesh mechanism employed in a sixth embodiment of the present invention, at a part where a return mechanism is arranged;

Fig. 25 is a front view of a synchronizing hub and a coupling sleeve that are incorporated with the return mechanism in the sixth embodiment;

Fig. 26 is a sectional view of a synchromesh mechanism employed in a seventh embodiment of the present invention, at a part where a synchronizing support force generating mechanism is arranged;

Figs. 27A and 27B are side views of the synchromesh mechanism employed in the seventh embodiment, showing different operation conditions of the mechanism respectively;

Fig. 28 is an exploded perspective partial view of the synchronizing support force generating mechanism employed in the seventh embodiment;

Fig. 29 is an illustration depicting a counterforce of the synchronizing support force, that is partially received by a coupling sleeve, in case of the seventh embodiment; and

Fig. 30 is a time chart depicting the characteristics of operation load needed by a coupling sleeve for achieving a gear change, in case of the seventh embodiment of the present invention.

## DETAILED DESCRIPTION OF THE EMBODIMENTS

In the following, the present invention will be described in detail with reference to seven embodiments 100, 200, 300, 400, 500, 600 and 700 with the aid of the accompanying drawings.

For ease of understanding, various directional terms, such as, right, left, upper, lower, rightward and the like are used in the description. However, such terms are to be understood with respect to only a drawing or drawings on which corresponding part or portion is shown.

Furthermore, throughout the description, substantially the same parts are denoted by the same numerals, and repeated explanation on such same parts will be omitted for simplification of the description.

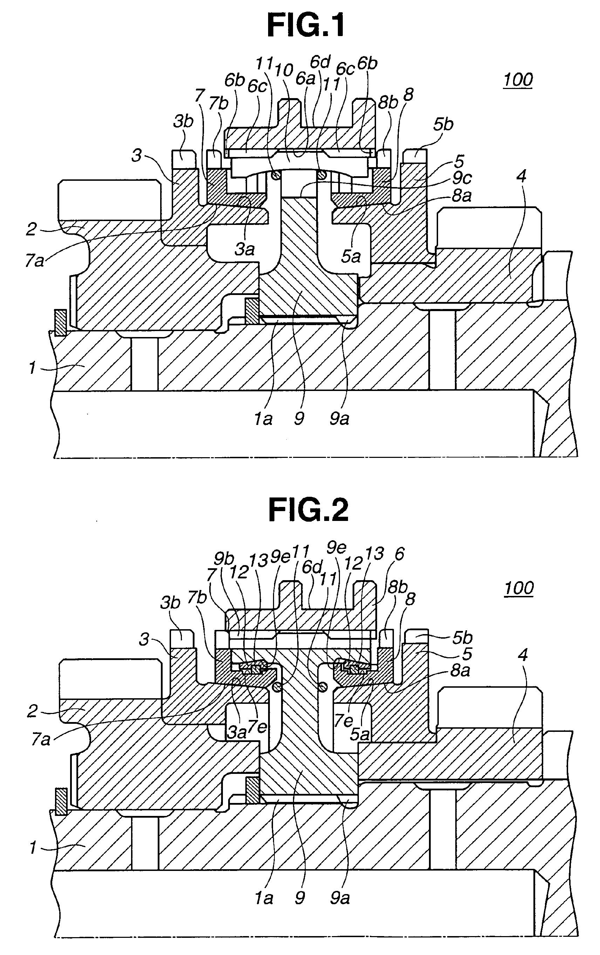

Referring to Figs. 1 to 7, particularly Figs. 1 and 2, there is shown a synchromesh mechanism 100 employed in a first embodiment of the present invention.

As shown in the drawings, particularly Figs. 1 and 2, synchromesh mechanism 100 generally comprises a transmission rotation shaft 1, a first gear 2, a first clutch gear 3, a second gear 4, a second clutch gear 5, a coupling sleeve 6, a first balk ring 7, a second balk ring 8, a synchronizing hub 9 and three insert keys 10.

On axially spaced two portions of transmission rotation shaft 1, there are rotatably disposed first gear 2 and second gear 4 respectively. First clutch gear 3 is press-fitted to first gear 2 to constitute a single unit, and similar to this, second clutch gear 5 is press-fitted to the second gear 4 to constitute a single unit. As shown, first clutch gear 3 and second clutch gear 5 are arranged to face each other with a certain space kept therebetween. First and second clutch gears 3 and 5 are respectively formed with cone surfaces 3a and 5a which are identical in shape. Each clutch gear 3 or 5 is formed with a plurality of spline teeth 3b or 5b.

Coupling sleeve 6 is arranged between first gear 2 and second gear 4 to serve as an input member through which a speed change operation load is inputted to gear 2 or 4. Coupling sleeve 6 is connected with synchronizing hub 9 by means of a spline connection, and thus, these two elements 6 and 9 rotate like a single unit while permitting an axial movement of coupling sleeve 6 relative to synchronizing hub 9.

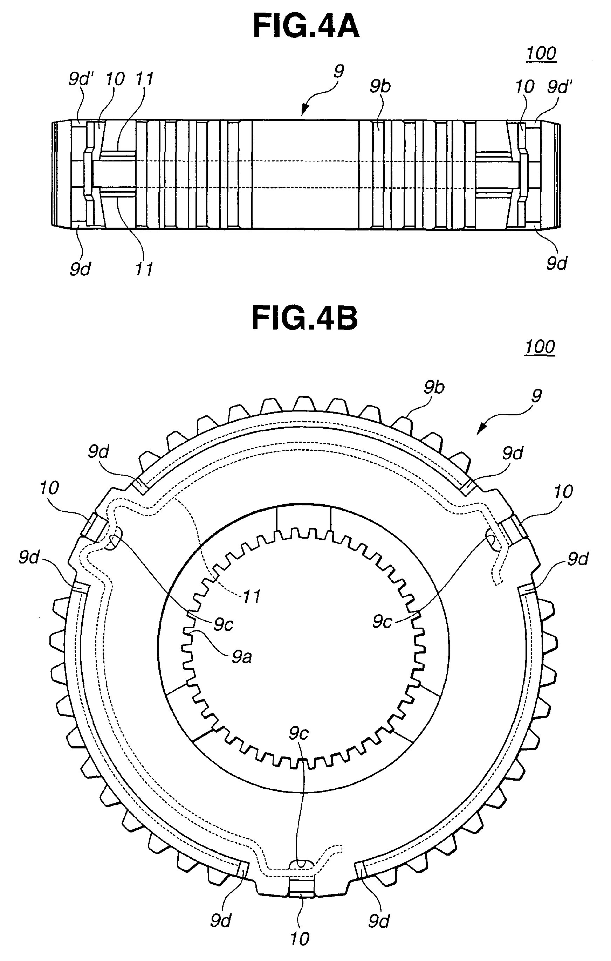

On a cylindrical inner surface of coupling sleeve 6, there are formed three equally spaced key grooves 6a for supporting respective insert keys 10 (see Fig. 4B) and axially spaced left and right spline teeth 6c and 6c each having an axially outer end 6b chamfered. Coupling sleeve 6 is formed therearound with a fork groove 6d with which forks of a shift fork (not shown) are operatively engaged.

First balk ring 7 is an axially movable synchronizing member that smoothly synchronizes rotation of first gear 2 with that of synchronizing hub 9.

As will be clarified from the following, first balk ring 7 is permitted to make a rotation of a predetermined angle about the axis of transmission rotation shaft 1 relative to synchronizing hub 9 under a given condition. When, due to the rotation of first balk ring 7 relative to synchronizing hub 9, an inclined part of first balk ring 7 and an inclined part of synchronizing hub 9 are brought into an intimate contact, a so-called synchronizing support force "Fa" is produced with which first balk ring 7 is pressed against first clutch gear 3.

That is, on a cylindrical inner surface of first balk ring 7, there is formed a first balk ring cone surface 7a that is intimately contactable with the above-mentioned first clutch gear cone surface 3a, and on an outer surface of first balk ring 7, there is formed a first chamfer 7b.

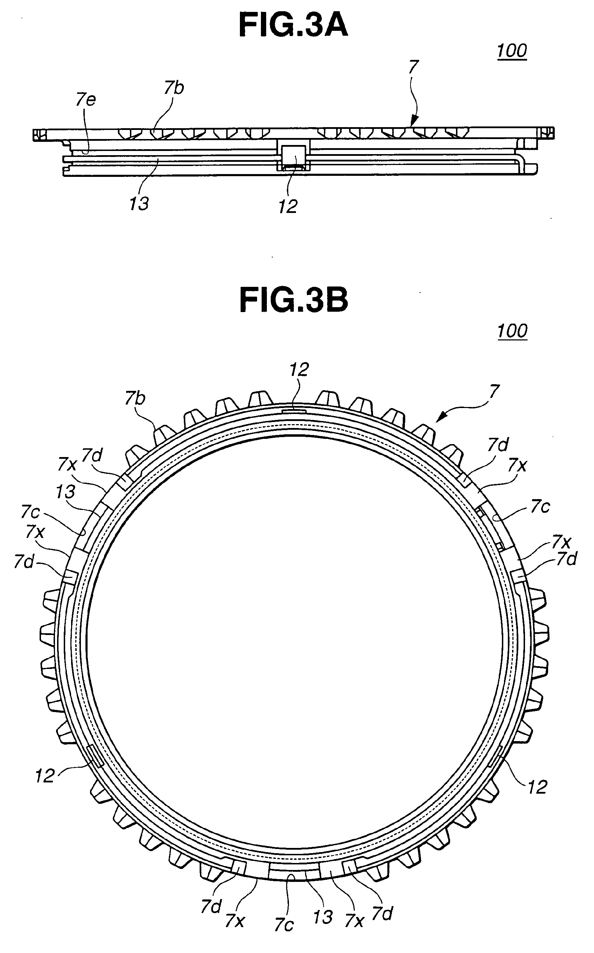

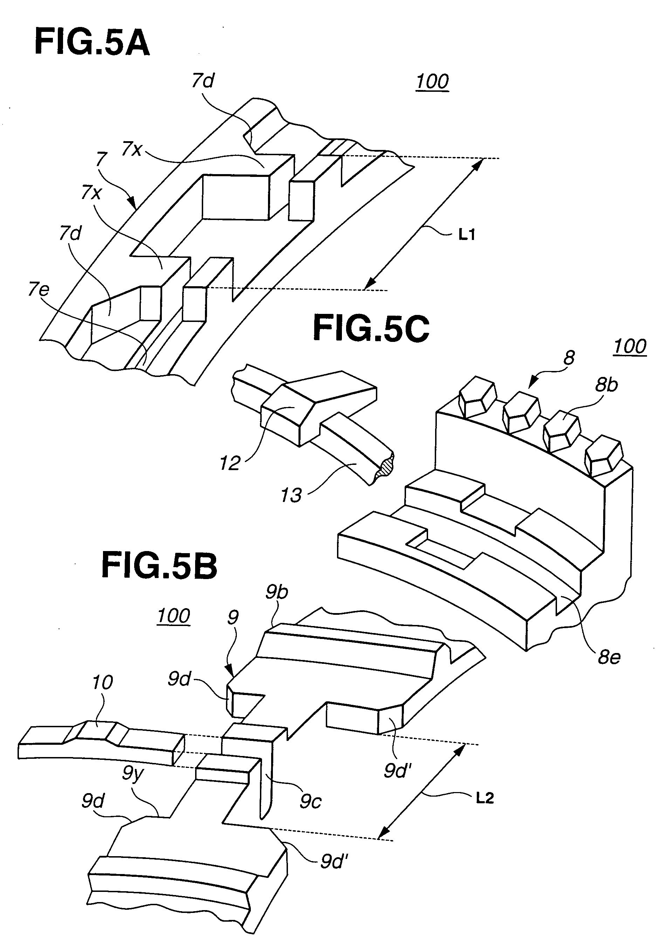

Furthermore, as is seen from Fig. 3B, first balk ring 7 is formed with three equally spaced key grooves 7c each of which is shaped and sized to receive one end part of the corresponding insert key 10. Each key groove 7c is defined between opposed banks 7c, as is clearly shown in Fig. 5A.

Referring back to Figs. 1 and 2, second balk ring 8 is an axially movable synchronizing member that smoothly synchronizes rotation of second gear 4 with that of synchronizing hub 9. Furthermore, second balk ring 8 is permitted to make a rotation of predetermined angle relative to synchronizing hub 9. That is, like the above-mentioned first balk ring 7, second balk ring 8 is permitted to make a rotation about the axis of transmission rotation shaft 1 by a predetermined angle relative to synchronizing hub 9. Furthermore, like first balk ring 7, second balk ring 8 is formed with three equally spaced key grooves (not shown) each of which is shaped and sized to receive the other end part of the corresponding insert key 10.

On a cylindrical inner surface of second balk ring 8, there is formed a second balk ring cone surface 8a that is intimately contactable with the above-mentioned second clutch gear cone surface 5a, and on an outer surface of second balk ring 8, there is formed a second chamfer 8b.

Synchronizing hub 9 is a synchronizing member that is arranged between the above-mentioned two balk rings 7 and 9, and is connected to transmission rotation shaft 1 through a spline connection. On a cylindrical inner surface of synchronizing hub 9, there are formed a plurality of spline teeth 9a (see Fig. 2) that are operatively engaged with spline teeth 1a formed on transmission rotation shaft 1. While, on a cylindrical outer surface of synchronizing hub 9, there are formed a plurality of spline teeth 9b that are operatively engaged with spline teeth 6b of the above-mentioned coupling sleeve 6.

As is seen from Fig. 4B, three insert keys 10 are axially movably received in respective key grooves 9c that are formed at equally spaced three positions of the outer surface of synchronizing hub 9. As is seen from Fig. 5B, each key groove 9c is defined between leading ends of circumferentially extending two narrow banks 9x and 9x of synchronizing hub 9. As is seen from this drawing, due to provision of such two banks 9x and 9x, first and second bay portions 9y and 9y' are defined by synchronizing hub 9 at left and right sides of two banks 9x and 9x, respectively.

The three insert keys 10 are supported by synchronizing hub 9, coupling sleeve 6 and a semi-circular key spring 11. Each insert key 10 has at its outer surface a key projection that is locked in the corresponding key groove 6a of coupling sleeve 6 to achieve positioning of insert key 10. Thus, insert keys 10 can rotate together with synchronizing hub 9 and can axially move together with coupling sleeve 6.

In the following, a synchronizing support force generating mechanism and a return mechanism that constitute an essential part of synchromesh mechanism 100 of the present invention will be described with reference to the drawings.

For such description, Figs. 3A, 3B, 4A, 4B, 5A, 5B and 5C will be used in addition to the above-mentioned Figs. 1 and 2. Figs. 3A and 3B show first balk ring 7, Figs. 4A and 4B show synchronizing hub 9 and Figs. 5A, 5B and 5C are drawings depicting the construction of the synchronizing support force generating mechanism.

As will become apparent as the description proceeds, the synchronizing support force generating mechanism includes a first arrangement having a function wherein before coupling sleeve 6 presses first balk ring cone surface 7a upon contact between chamfer 6b of coupling sleeve 6 and chamfer 7b of first balk ring 7, there is produced a synchronizing support force that presses first balk ring cone surface 7a, and a second arrangement having a function wherein before coupling sleeve 6 presses second balk ring cone surface 8a upon contact between chamfer 6b of coupling sleeve 6 and chamfer 8b of second balk ring 8, there is produced a synchronizing support force that presses second balk ring cone surface 8a.

The first arrangement of the synchronizing support force generating mechanism comprises, as is seen from Fig. 5A, a pair of inclined surfaces 7d and 7d provided at both sides of each key groove 7c of first balk ring 7, and, as is seen from Fig. 5B, a pair of inclined surfaces 9d and 9d provided at both sides of each key groove 9c of synchronizing hub 9. More specifically, the paired inclined surfaces 7d and 7d are provided on outer walls of circumferentially spaced two banks 7x and 7x of first balk ring 7. As will become apparent, the paired inclined surfaces 7d and 7d of first balk ring 7 are intimately contactable with the paired inclined surfaces 9d and 9d of synchronizing hub 9.

Like the first arrangement, the second arrangement of the synchronizing support force generating mechanism comprises a pair of inclined surfaces (not shown) provided at both sides of each key groove (not shown) of second balk ring 8, and a pair of inclined surfaces 9d' and 9d' (see Fig. 5B) provided at both sides of each key groove 9c of synchronizing hub 9. The paired inclined surfaces of second balk ring 8 are intimately contactable with the paired inclined surfaces 9d' and 9d' of synchronizing hub 9.

Preferably, for achieving an appropriate synchronizing support force "Fa", each inclined surface 7d, 9d or 9d' has an inclination angle of about 45 degrees relative to an imaginary plane that is perpendicular to an axis of transmission rotation shaft 1.

As is seen from Figs. 5A and 5B, a length "L1" between the outer walls of banks 7x and 7x of first balk ring 7 is smaller than a width "L2" of first bay portion 9y of synchronizing hub 9. That is, the following inequality is established:

$$L1 < L2 \qquad (1)$$

As will become apparent as the description proceeds, the return mechanism includes a first arrangement having a function wherein when coupling sleeve 6 is in its neutral position or when coupling sleeve 6 is completely meshed with first clutch gear 3, first balk ring 7 is returned to its original position to suppress generation of the synchronizing support force while separating first balk ring cone surface 7a from first clutch gear cone surface 3a, and a second arrangement having a function wherein when coupling sleeve 6 is in its neutral position or when coupling sleeve 6 is completely meshed with second clutch gear 5, second balk ring 8 is returned to its original position to suppress generation of the synchronizing support force while separating second balk ring cone surface 8a from second clutch gear cone surface 5a.

As is understood from Figs. 2, 3 and Fig. 5C, each of the first and second arrangements of the return mechanism comprises an annular recess 9e (see Fig. 2) formed on synchronizing hub 9 and having an inclined bottom surface, three equally spaced return keys 12 engageable with annular recess 9e, an annular spring 13 biasing the return keys 12 radially outward toward the annular recess 9e and an annular spring groove 7e or 8e formed on first balk ring 7 or second balk ring 8 for receiving annular spring 13.

In the following, operation of synchromesh mechanism 100 of the first embodiment will be described with reference to the drawings, particularly Figs. 1, 6, 7A and 7B.

SYNCHRONIZING OPERATION

First, synchronizing operation effected when, for achieving a shift-up operation, coupling sleeve 6 is shifted leftward in Fig. 1 will be described. Upon such shifting, higher speed rotation of first gear 2 would be reduced to be synchronized with lower speed rotation of transmission rotation shaft 1.

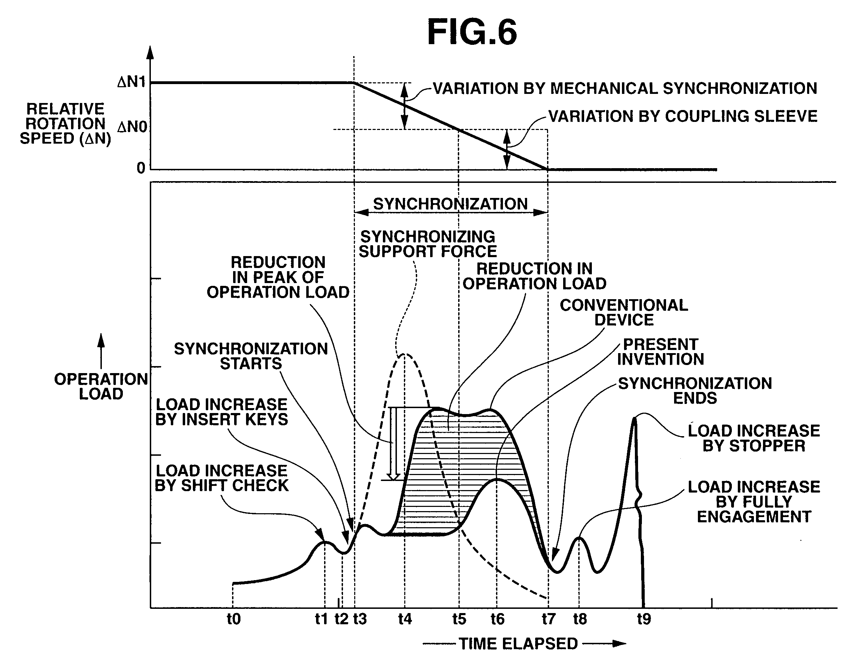

As is seen from the time chart of Fig. 6, when a shift lever (not shown) is shifted at time "t0", coupling sleeve 6 in the neutral position as shown in Fig. 1 is moved leftward together with the three insert keys 10. As shown in the time chart, just after time "t0", operating load is gradually increased, and at time "t1", a detent feeling member (not shown) incorporated with the shift lever rides over detent balls against a biasing force of a spring (not shown). Thus, at time "t1", a so-called "shift check load" shows its peak. Thereafter, the load lowers to time "t2" when insert keys 10 start to intimately contact first balk ring 7. Thus, as is seen from the time chart, a so-called "insert key load" starts to increase. When, due to increase of the insert key load, first balk ring 7 is moved leftward in Fig. 1, first balk ring cone surface 7a is brought into intimate contact with first clutch gear cone surface 3a to generate a friction torque. Thus, at time "t3", the synchronizing operation induced by the synchronizing support force starts.

Upon starting of the synchronizing operation, the friction torque between the two cone surfaces 7a and 3a brings about a slight relative rotation between first balk ring 7 and synchronizing hub 9 inducing a condition wherein each insert key 10 is in contact with one of circumferential side walls of one of the three key grooves 7c of first balk ring 7.

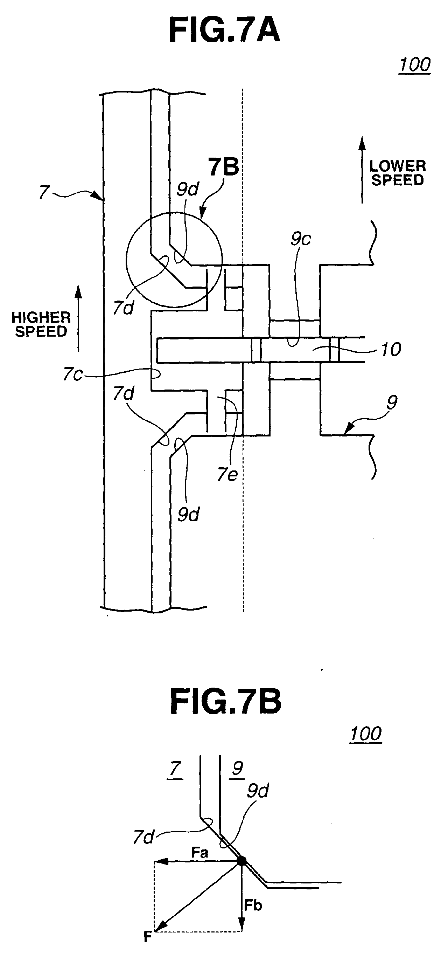

Upon this, as is seen from Fig. 7B, one inclined surface 7d of first balk ring 7 is in contact with corresponding inclined surface 9d of synchronizing hub 9, and thus, as is seen from this drawing, a relative rotation force "F" is produced which is perpendicularly applied to inclined surface 7d of first balk ring 7. As shown, the force "F" includes an axial component force "Fa" and a circumferential component force "Fb".

It is to be noted that the axial component force "Fa" is a synchronizing support force with which first balk ring 7 is biased toward first gear 2.

Referring back to the time chart of Fig. 6, the axial component force "Fa" shows a peaked characteristic in a range from time "t3" to time "t5". That is, at time "t4", the axial component force "Fa" shows a peak, and at time "t5", a switching takes place as will be described in the following.

Due to work of the axial component force "Fa", a friction force is produced between first clutch gear cone surface 3a and first balk ring cone surface 7a, and a relative rotation speed "$\Delta N$" between transmission rotation shaft 1 (viz., synchronizing hub 9) and first gear 2 (viz., first clutch gear 3) reduces from an initial value "$\Delta N1$" to a value "$\Delta N0$". This synchronization is carried out between synchronizing hub 9 and first balk ring 7, and a counterforce of the synchronizing support force "Fa" is received by synchronizing hub 9 connected to transmission rotation shaft 1, and thus, it never occurs that the counterforce of the synchronizing support force "Fa" is transmitted to coupling sleeve 6. That is, the synchronizing support force "Fa" that is mechanically produced functions to support the shift operation without increasing the load needed for carrying out the shifting movement.

With passage of time, coupling sleeve 6 is further moved, and at time "t5" of the time chart of Fig. 6, the synchronizing support force "Fa" is matched with the load applied to coupling sleeve 6. Upon this, the chamfered end 6b of coupling sleeve 6 becomes in contact with first chamfer 7b of first balk ring 7 and thus, the further movement of coupling sleeve 6 is suppressed. Upon this, there is produced a certain friction torque between first clutch gear cone surface 3a and first balk ring cone surface 7a, and thus, a synchronization under a balked condition takes place therebetween in a conventional manner.

As is understood from the time chart of Fig. 6, this synchronizing operation effected by the contact between chamfered end 6b and first chamfer 7b needs only a reduction in the relative rotation speed "$\Delta N$" from the value "$\Delta N0$" that has been previously reduced by the mechanical synchronizing operation to 0 (zero), and thus, the operation load at time "t6" is low, and at time "t7" when the relative rotation speed "ΔN" becomes 0 (zero), the synchronization operation is finished or completed.

Upon this complement, the friction torque disappears and thus, the force for stopping coupling sleeve 6 disappears thereby permitting movement of the same. In response to the axial movement of coupling sleeve 6 after time "t6", each insert key 10 is disengaged from the corresponding key groove 6a of coupling sleeve 6, and at time "t7", the insert key 10 pushes away first balk ring 7, and then at time "t8", coupling sleeve 6 becomes fully engaged with spline teeth of first clutch gear 3, and then at time "t9", the shift operation is finished.

As is seen from the time chart of Fig. 6, in a conventional synchromesh mechanism, during the synchronizing operation, chamfered portions of coupling sleeve and balk ring contact, and in case wherein for achieving the synchronizing operation, the reduction of relative rotation speed "ΔN" from the initial value "ΔN1" to zero is achieved by only the operation load applied from the coupling sleeve, the operation load is rapidly increased at a time just before the time "t4" and at a time near the time "t6", the operation load is lowered.

While in synchromesh mechanism 100 of the first embodiment of the present invention, the synchronizing support force for reducing the relative rotation speed "ΔN" from the initial value "ΔN1" to the value "ΔN0" is previously compensated by the synchronizing support force "Fa" generated by the contact between inclined surfaces 7d and 9d before the contact between chamfered end 6b of coupling sleeve 6 and first chamfer 7b of first balk ring 7. Thus, as is seen from the time chart of Fig. 6, a lower operation load characteristic is obtained in the range from time "t5" to time "t7". Actually, the hatched area shown in the time chart of Fig. 6 depicts an amount by which the operation load is reduced in the present invention as compared with the conventional synchromesh mechanism.

Accordingly, according to the first embodiment 100 of the present invention, manipulation of the shift lever by the driver is easily carried out with a reduced operating force. Furthermore, in case of the semi-automatic power transmission, it is only necessary to prepare a relatively low power electric actuator for assisting movement of coupling sleeve.

RETURN OPERATION OF BALK RING

As is described hereinabove, in the synchromesh mechanism 100 of the first embodiment, the shift-up operation is easily carried out with a reduced operating force applied to the shift lever.

Upon completion of the synchronization, each return key 12 is slid up in the annular recess 9e of synchronizing hub 9 due to the biasing force of annular spring 13. As a result, first balk ring 7 is returned toward synchronizing hub 9, and thus, first balk ring cone surface 7a is separated from first clutch gear cone surface 3a thereby producing no friction force therebetween any longer. Thus, a shift-down operation effected against such friction force is easily carried out with a reduced operation force.

The need of such separation of first balk ring cone surface 7a from first clutch gear cone surface 3a will become apparent from the following description.

As is described hereinabove, first and second balk rings 7 and 8 are rotatable relative to synchronizing hub 9 and axially movable relative to the same. Thus, if a specified measure according to the first embodiment 100 of the invention is not employed, the following undesired phenomena tend to occur.

That is, in the synchronizing support force generating mechanism that is not selected, a lubrication oil put between balk ring cone surface 7a or 8a and clutch gear cone surface 3a or 5a brings about a relative rotation between synchronizing hub 9 and balk ring cone surface 7a or 8a due to viscosity of the lubrication oil. Under this condition, the synchronizing support force generating mechanism is forced to operate even when coupling sleeve 6 is not applied with a shifting force, and thus, cone surface 7a or 8a and cone surface 3a or 5a are worn down shortening the life of synchromesh mechanism. In worst case, due to the synchronizing support force generated, the relative rotation between synchronizing hub 9 and balk ring 7 or 8 becomes zero which may cause a locked condition of the transmission. This will be called first drawback.

Furthermore, in the synchronizing support force generating mechanism that is selected, when, after completion of the synchronization, the spline teeth of coupling sleeve 6 and those of clutch gear 3 or 5 keep their engagement, there is produced no force that presses balk ring 7 or 8 and thus balk ring cone surface 7a or 8a is kept separated from clutch gear cone surface 3a or 5a. However, due to a fluctuation in engine speed, it tends to produce a relative rotation between synchronizing hub 9 and balk ring 7 or 8. If such relative rotation becomes marked, the synchronizing support force generating mechanism becomes operative. In this case, the balk ring 7 or 8 is pressed against clutch gear 3 or 5 inducing an engaged condition between balk ring cone surface 7a or 8a and clutch gear cone surface 3a or 5a. If this engaging condition is kept, a speed change operation from an existing speed to another speed needs a certain force for disengaging the two cone surfaces 7a (or 8a) and 3a (or 5a), which increases the force applied to coupling sleeve 6. This will be called second drawback.

However, the first embodiment 100 of the present invention is free of the above-mentioned undesired phenomena because of provision of the return mechanism.

That is, due to work of such return mechanism, when coupling sleeve 6 returns to the neutral position, first balk ring 7 or second balk ring 8 is returned to its original position disengaging balk ring cone surface 7a or 8a from clutch gear cone surface 3a or 5a. With this, the above-mentioned first drawback is suppressed.

Furthermore, due to work of the return mechanism, when the spline teeth of coupling sleeve 6 and those of first clutch gear 3 (or second clutch gear 5) are kept engaged, first balk ring 7 or second balk ring 8 is returned to its original position disengaging balk ring cone surface 7a or 8a from clutch gear cone surface 3a or 5a. With this, the above-mentioned second drawback is suppressed.

In the following, various advantages obtained in the synchromesh mechanism 100 of the first embodiment of the present invention will be described.

(1) Due to provision of the synchronizing support force generating mechanism, the peak value of operation load needed for achieving the synchronization can be lowered. That is, because of the friction torque generated between balk ring cone surface 7a or 8a and clutch gear cone surface 3a or 5a during the speed change operation, the circumferential force "F" produced due to the relative rotation between synchronizing hub 9 and balk ring 7 or 8 can be converted to the axial component force "Fa" that presses balk ring 7 or 8 against clutch gear 3 or 5. Thus, the peak value of operation load needed for achieving the synchronization can be considerably lowered. Thus, in case of manual transmissions, the force needed by the driver for actuating the shift lever can be reduced, and furthermore, in case of a semi-automatic power transmissions, a relatively low power electric actuator can be used for assisting movement of coupling sleeve.

(2) Due to provision of the return mechanism, the synchronizing support force is not generated when coupling sleeve 6 is in its neutral position and coupling sleeve 6 and clutch gear 3 or 5 are fully engaged at their spline teeth. That is, due to provision of the return mechanism, balk ring cone surface 7a or 8a is disengaged from clutch gear cone surface 3a or 5a under such condition. Accordingly, a clearance between balk ring cone surface 7a or 8a and clutch gear cone surface 3a or 5a, that is not operative in carrying out the speed change, is assuredly provided, which prevents such cone surfaces from having marked wearing. Furthermore, due to provision of the return mechanism, engagement between balk ring cone surface 7a or 8a and clutch gear cone surface 3a or 5a after completion of the speed change to a desired speed is suppressed.

(3) As is seen from Figs. 5A and 5B, due to provision of inclined surfaces 7d and 7d of bulk ring 7 (or 8) and inclined surfaces 9d and 9d of synchronizing hub 9, the relative rotation between bulk ring 7 (or 8) and synchronizing hub 9 induces an intimate contact between the inclined surfaces 7d and 7d and the inclined surfaces 9d and 9d, which produces the synchronizing support force "Fa". That is, the circumferential force "F" produced when the relative rotation take places can be effectively converted to the axial component force "Fa" that presses balk ring 7 or 8 against clutch gear 3 or 5.

(4) The return mechanism includes two annular cresses 9e provided by synchronizing hub 9, six return keys 12 three of which are incorporated with one of the annular recess 9e and two annular springs 13 each biasing the three return keys 12 radially outward toward the annular recess 9e. This return mechanism can be compactly received between balk ring 7 or 8 and synchronizing hub 9.

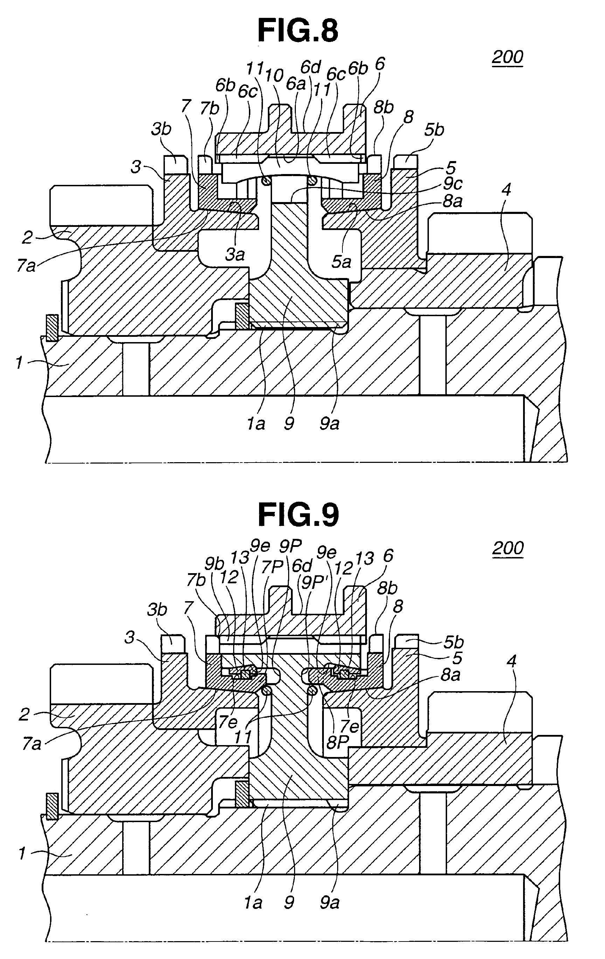

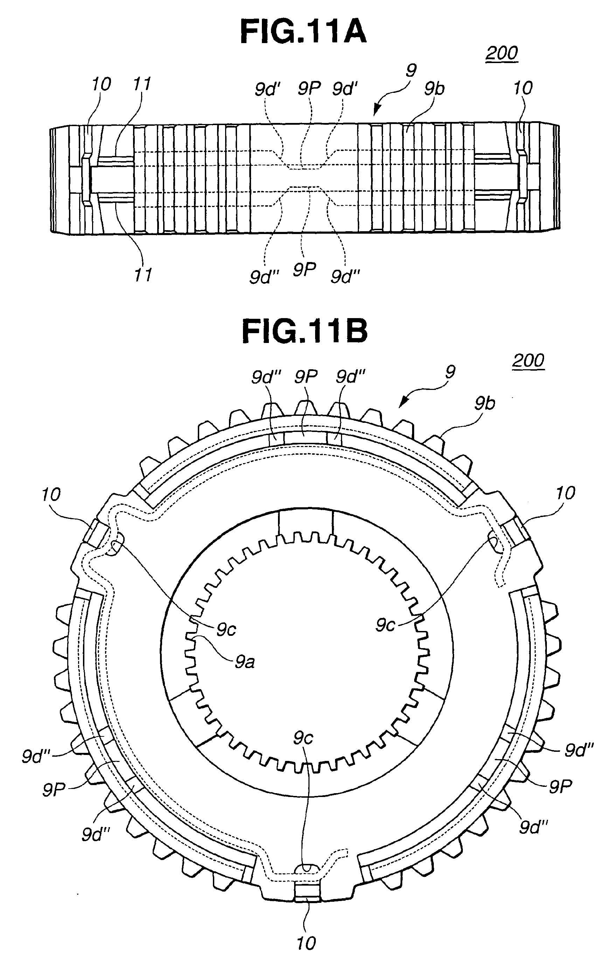

Referring to Figs. 8 to 13B, there is shown a synchromesh mechanism 200 employed in a second embodiment of the present invention.

Since the second embodiment 200 is similar to the above-mentioned first embodiment 100 in construction, only parts and portions that are different from those of the first embodiment 100 will be described in detail in the following. Substantially same parts and portions are denoted by the same numerals as in the first embodiment 100.

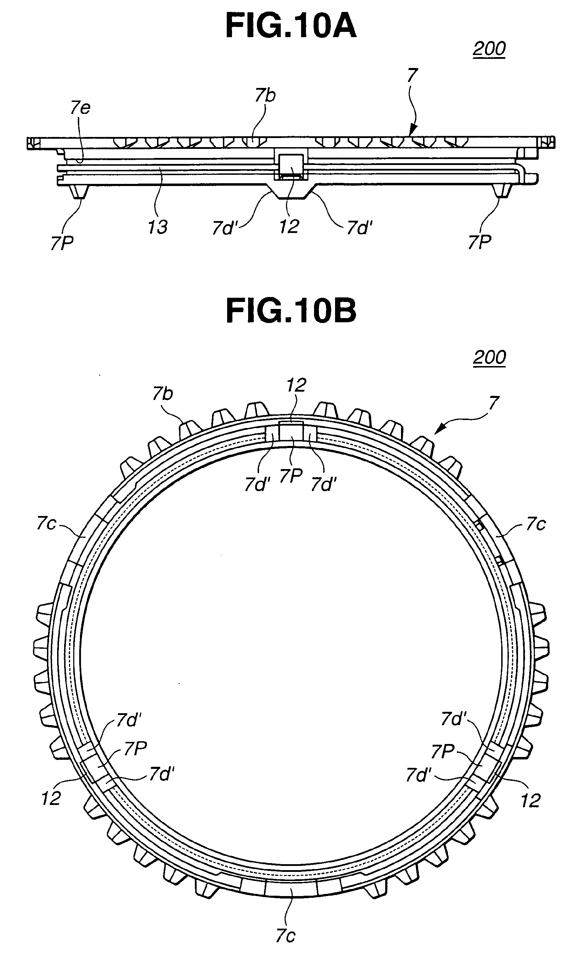

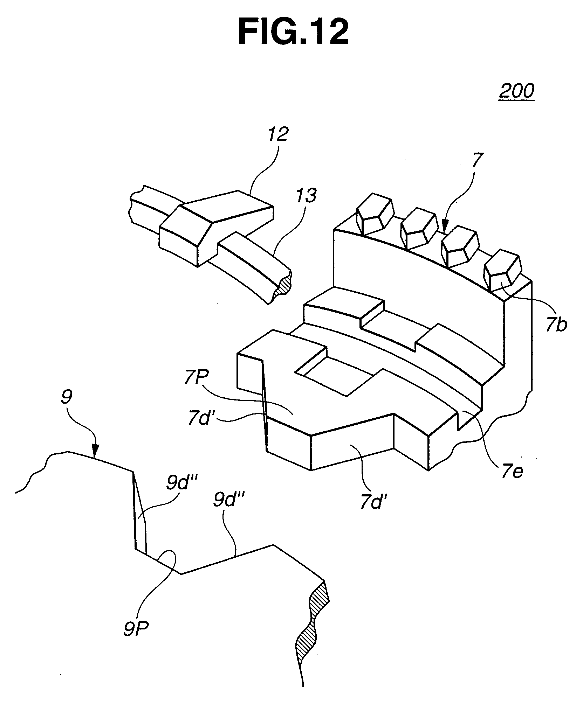

As is seen from Figs. 10A, 10B and 12, the synchronizing support force generating mechanism of this second embodiment 200 comprises three equally spaced trapezoidal projections 7p that are provided by first balk ring 7, each having two inclined surfaces 7d' at shoulder portions thereof, and further comprises, as is seen from Figs. 9, 11A, 11B and 12, three equally spaced trapezoidal recesses 9p that are provided by one axial side of synchronizing hub 9, each having two inclined surfaces 9d". Upon engagement, the three projections 7p are received in the three recesses 9p respectively, as will be described hereinafter.

As is seen from Fig. 9, second balk ring 8 has substantially the same construction as first balk ring 7 and thus has three equally spaced trapezoidal projections 8p each having two inclined surfaces at shoulder portions thereof, and synchronizing hub 9 has at the other axial side three equally spaced trapezoidal recesses 9p' each having two inclined surfaces. Like the above, upon engagement, the three projections 8p of second balk ring 8 are received in the three recesses 9p' of synchronizing hub 9 respectively.

Preferably, each of the inclined surfaces 7d', 9d" has an inclination angle of about 45 degrees relative to an imaginary plane that is perpendicular to an axis of transmission rotation shaft 1.

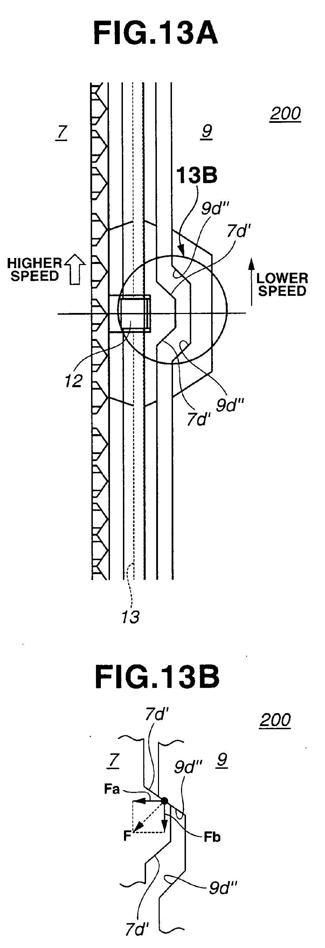

In the following, the synchronizing operation of the second embodiment 200 in case of a speed change wherein first gear 2 becomes engaged with transmission rotation shaft 1 will be described with reference to Figs. 13A and 13B.

That is, upon contact between balk ring cone surface 7a and clutch gear cone surface 3a, the synchronizing operation starts. As is seen from Figs. 8, 13A and 13B, due to faster rotation speed of balk ring 7 drawn by first gear 2, one of inclined surfaces 7d' of each trapezoidal projection 7p of balk ring 7 is brought into contact with one of inclined surfaces 9d" of each trapezoidal recess 9p of synchronizing hub 9. As is seen from Fig. 13B, when the above-mentioned contact takes place, a relative rotation force "F" is produced which is perpendicularly applied to inclined surface 7d' of first balk ring 7. As shown, the force "F" includes an axial component force "Fa" and a circumferential component force "Fb".

It is to be noted that the axial component force "Fa" is a synchronizing support force with which first balk ring 7 is biased toward first gear 2. Since the axial component force "Fa" has been explained in the above-mentioned first embodiment 100 with reference to the time chart of Fig. 6, repeated explanation will be omitted.

In the second embodiment 200, the following advantage is further obtained in addition to the above-mentioned four advantages possessed by the first embodiment 100.

That is, due to the trapezoidal shape of the projection 7p of balk ring 7 or 8 and that of the recess 9p or 9p' of synchronizing hub 9, compact construction of the synchronizing support force generating mechanism is achieved.

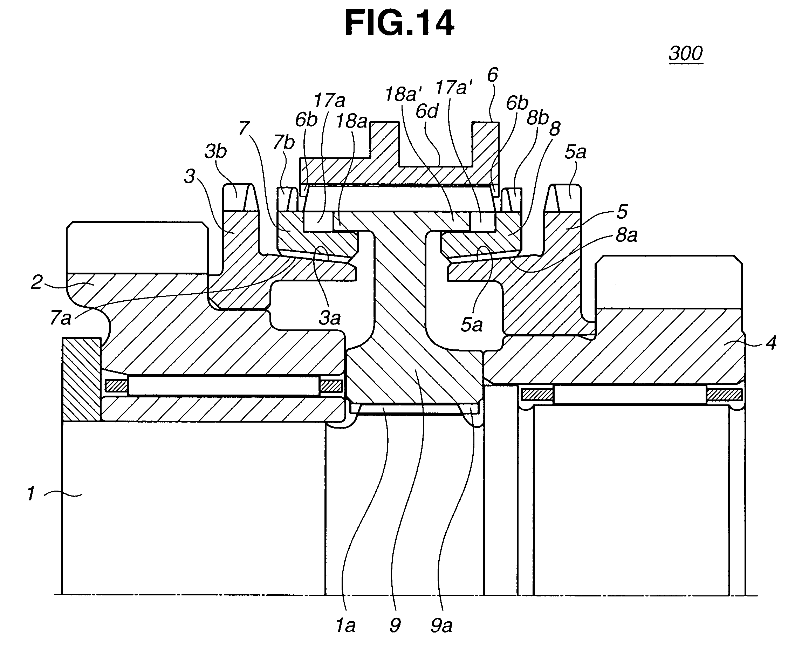

Referring to Figs. 14 to 16, there is shown a synchromesh mechanism 300 employed in a third embodiment of the present invention.

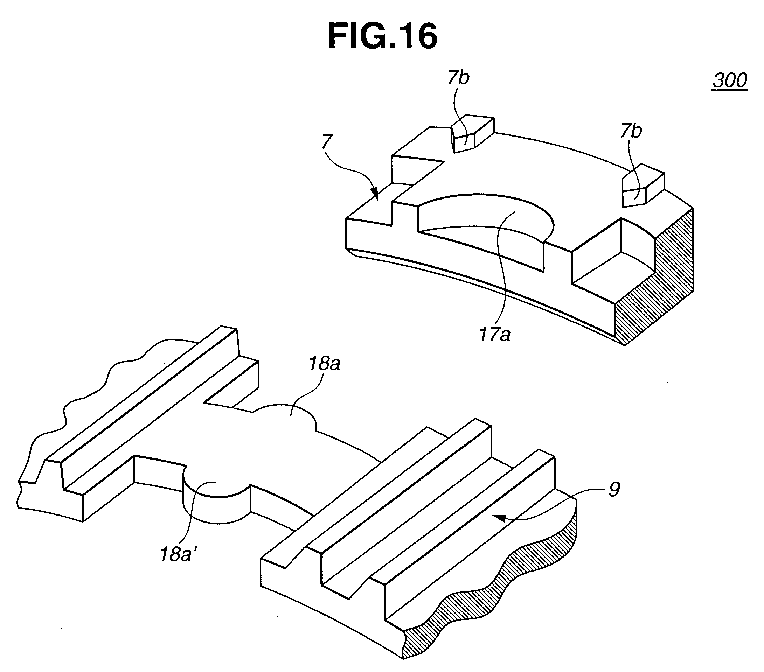

As is seen from Fig. 16, the synchronizing support force generating mechanism of this third embodiment 300 comprises three equally spaced semi-circular recesses 17a provided by first balk ring 7 and further comprises three equally spaced semi-circular projections 18a that are provided by one axial side of synchronizing hub 9. Upon engagement, the three projections 18a are received in the three recesses 17a respectively. As shown, the projections 18a are smaller than the recesses 17a in size.

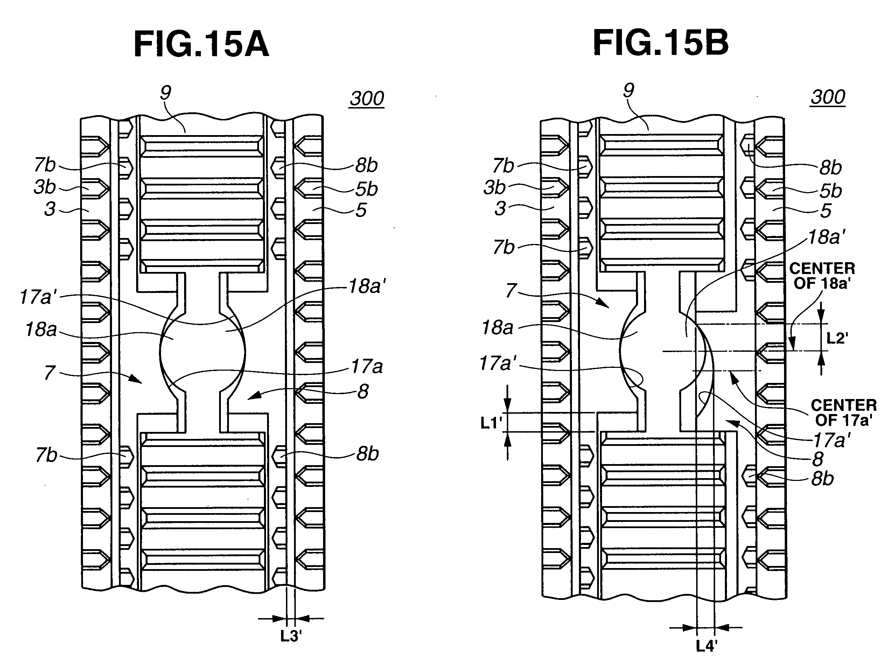

As is understood from Figs. 15A and 15B, second balk ring 8 has substantially the same construction as first balk ring 7 and thus has three equally spaced semi-circular recesses 17a', and synchronizing hub 9 has at the other axial side three equally spaced semi-circular projections 18a'. Like the above, upon engagement, the three projections 18a' of synchronizing hub 9 are received in the three recesses 17a' of second balk ring 8.

As will be understood from Figs. 15A and 15B, in this third embodiment 300, the following inequalities are established.

$$L2' > L1' \qquad (2)$$

wherein:

L1': index distance under neutral condition.
L2': circumferential distance between the center of semi-circular projection 18a' (or 18a) and a contact point where semi-circular projection 18a' (or 18a) contacts semi-circular recess 17a' (or 17a) for generation of synchronizing support force "Fa".

$$L4' > L3' \qquad (3)$$

wherein:

L3': axial clearance between balk ring 7 or 8 and clutch gear 3 or 5 under neutral condition.
L4': axial distance between the deepest position of each semi-circular recess 17a' (or 17a) and a contact point where semi-circular projection 18a' (or 18a) contacts semi-circular recess 17a' (or 17a) for generation of synchronizing support force "Fa".

In the following, the synchronizing operation of the third embodiment 300 will be described with reference to the drawings.

As is understood from Fig. 14, when, due to shifting of coupling sleeve 6, first balk ring cone surface 7a is brought into contact with first gear cone surface 3a, the synchronizing operation starts. Upon this, the relative positioning between synchronizing hub 9 and second clutch gear 5 gradually changes from the positioning shown by Fig. 15A to that shown by Fig. 15B moving the contact point between semi-circular projection 18a' and semi-circular recess 17a', as shown. When the relative positioning takes the positioning of Fig. 15B, the synchronizing support force "Fa" is produced by which second balk ring 8 is pushed toward second gear 4 (see Fig. 14).

Although not shown in the drawings, also the third embodiment 300 is equipped with a return mechanism that is substantially the same as that of the above-mentioned first embodiment 100. Due to the return mechanism, second balk ring 8 is returned to its original position when coupling sleeve 6 returns to the neutral position.

In the third embodiment 300, the following advantage is further obtained in addition to the above-mentioned four advantages possessed by the first embodiment 100.

That is, due to the rounded shape of the projection 18a or 18a' of synchronizing hub 9 and that of the recess 17a or 17a' of balk ring 7 or 8, smoothed contacting movement therebetween is achieved.

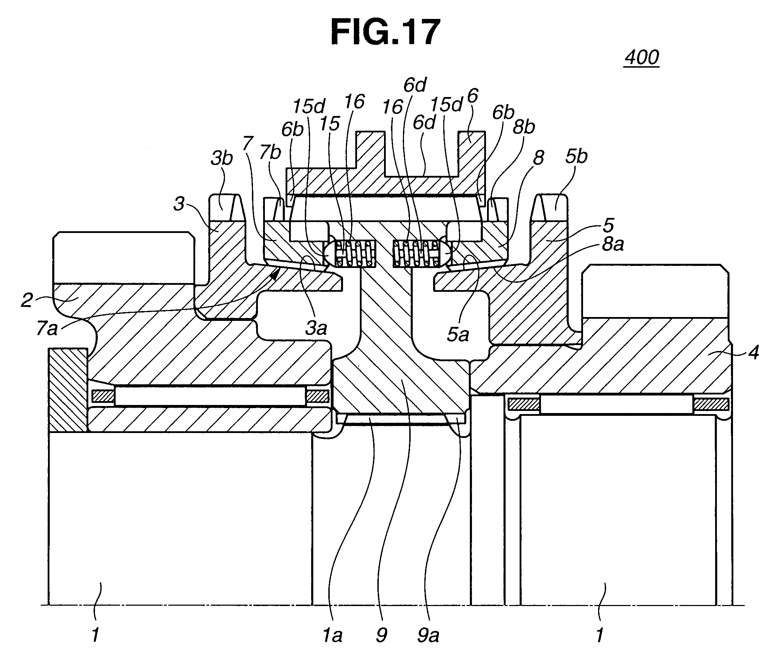

Referring to Figs. 17 to 19, there is shown a synchromesh mechanism 400 employed in a fourth embodiment of the present invention.

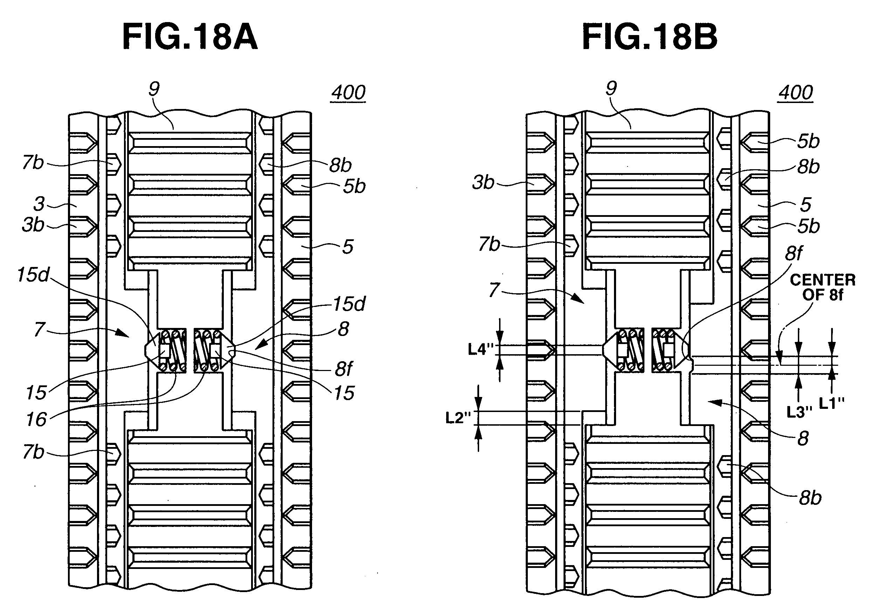

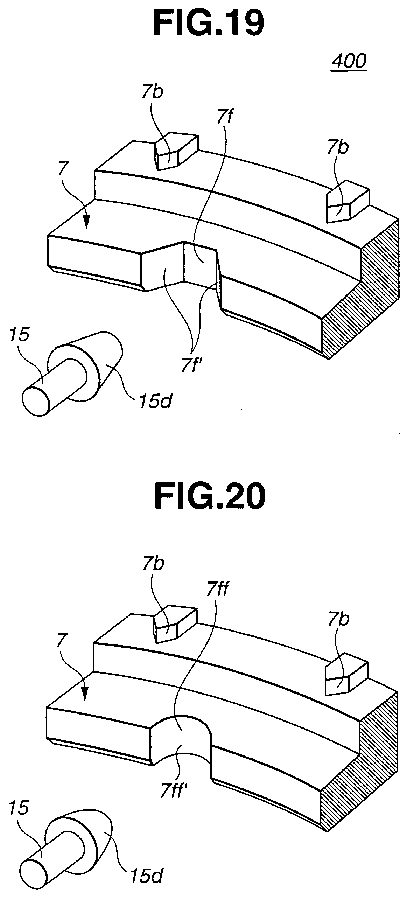

As is seen from Fig. 19, the synchronizing support force generating mechanism of this fourth embodiment 400 comprises three equally spaced trapezoidal recesses 7f each having inclined surfaces 7f' that are provided by first balk ring 7, and further comprises three equally spaced pin members 15 each having a conical head 15d that are provided by one axial side of synchronizing hub 9. As is seen from Fig. 18A, each pin member 15 has a coil spring 16 disposed thereabout. Upon engagement, the three pin members 15 are received in the three recesses 7f respectively.

As is understood from Figs. 18A and 18B, second balk ring 8 has substantially the same construction as first balk ring 7 and thus has three equally spaced trapezoidal recesses (7f), and synchronizing hub 9 has at the other axial side three equally spaced pin members (15). Each pin member (15) has a coil spring 16 disposed thereabout. Like the above, upon engagement, the pin members (15) of synchronizing hub 9 are received in the three recesses (7f) of second balk ring 8, respectively.

As is seen from Fig. 18A, under neutral condition, conical heads 15d of the three pin members 15 provided at the axial one side of synchronizing hub 9 and conical heads 15d of the three pin members 15 provided at the other axial side of synchronizing hub 9 are neatly received in trapezoidal recesses 7f of first balk ring 7 and trapezoidal recesses 8f of second balk ring 8, respectively. Under this condition, each coil spring 16 has substantially no biasing force to the corresponding pin member 15.

While, as is seen from Fig. 18B, when a relative rotation takes place between synchronizing hub 9 and second balk ring 8, pin members 15 provided at the other axial side of synchronizing hub 9 are disengaged from the corresponding trapezoidal recesses 8f of second balk ring 8 and pushed down by axially protruded major walls of second balk ring 8 against the force of coil springs 16. That is, under this condition, synchronizing support force "Fa" is produced by the coil springs 16 that are compressed.

In this fourth embodiment 400, the following inequalities are established.

$$L2'' > L1'' \qquad (4)$$

wherein:

L1": circumference distance between the center of trapezoidal recess 8f (or 7f) and inclined surface 8f' (or 7f') of the recess.
L2": index distance under neutral condition.

$$L4'' < L3'' \qquad (5)$$

wherein:

L3": circumferential distance between opposed inclined surfaces 8f' (or 7f') of the recess 8f (or 7f).
L4": diameter of conical head 15d of pin member 15.

Referring to Fig. 20, there is shown a modification 400' of synchromesh mechanism 400 employed in the fourth embodiment.

As is understood from this drawing, the synchromesh mechanism 400' of this modification is identical to the above-mentioned fourth embodiment 400 except the trapezoidal recesses possessed by first and second balk rings 7 and 8. That is, as shown, in this modification 400', each recess 7ff (and 8ff) is shaped semi-circular.

In the above-mentioned synchromesh mechanisms 100, 200 and 300 of first, second and third embodiments, the relative rotation force "F" is converted to the axial component force that serves as the synchronizing support force "Fa". While, in the mechanisms 400 and 400' of the fourth embodiment, the relative rotation force "F" is converted to the resilient force of the coil springs 16 that serves as the synchronizing support force "Fa".

In the fourth embodiments 400 and 400', the following advantage is further obtained in addition to the above-mentioned four advantages possessed by the first embodiment 100.

That is, due to employment of the coil springs 16, the synchronizing support force "Fa" is assuredly produced during the synchronizing operation of the synchromesh mechanism 400 or 500 which will be described in the following.

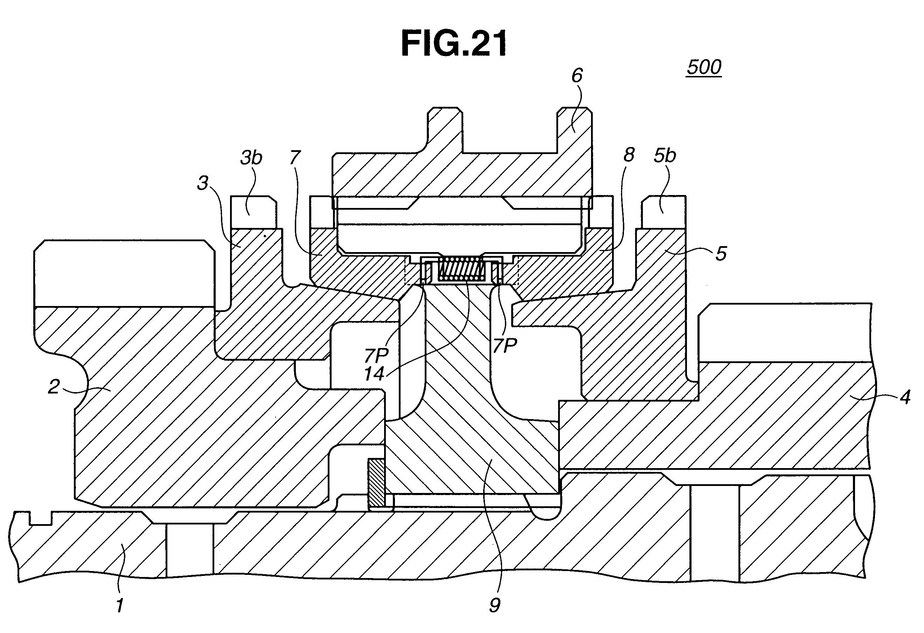

Referring to Figs. 21, 22A, 22B, 23A and 23B, there is shown a synchromesh mechanism 500 employed in a fifth embodiment of the present invention.

The synchromesh mechanism 500 is substantially the same as the above-mentioned second embodiments 200 except the return mechanism.

That is, as is seen from Fig. 21, three equally spaced return springs 14 are employed each being arranged between first and second balk rings 7 and 8.

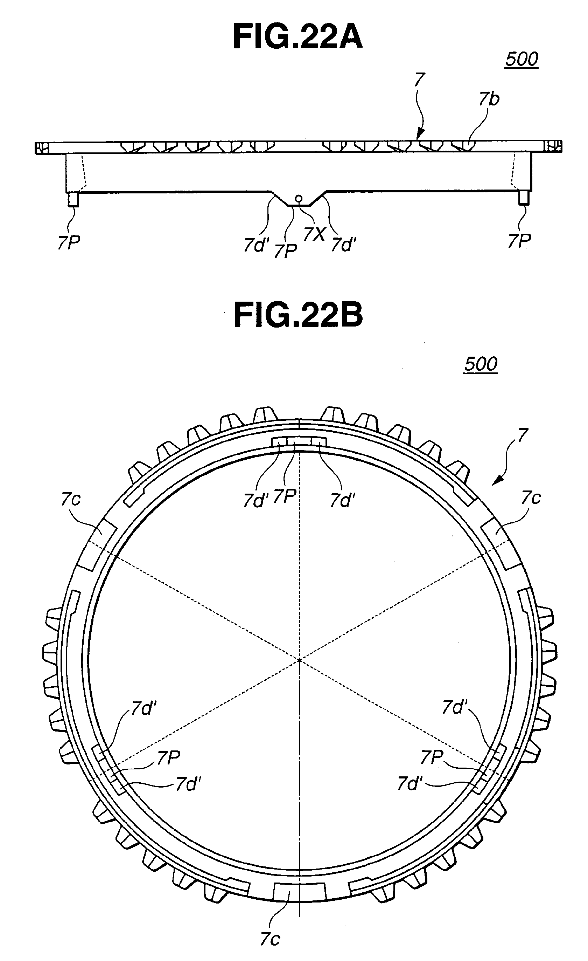

As is understood from Fig. 22A, each of first and second balk rings 7 and 8 (only first balk ring 7 is shown) has at the three equally spaced trapezoidal projections 7p respective hook holes 7x for catching ends of the return springs 14.

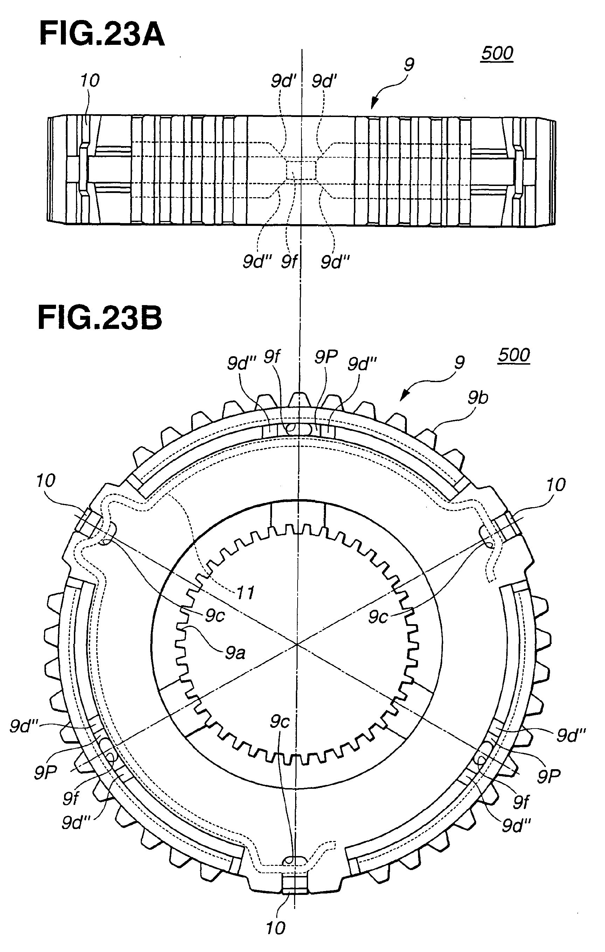

Furthermore, as is seen from Figs. 23A and 23B, synchronizing hub 9 has at the bottoms of three equally spaced trapezoidal recesses 9b respective openings 9f for passing therethrough the return springs 14.

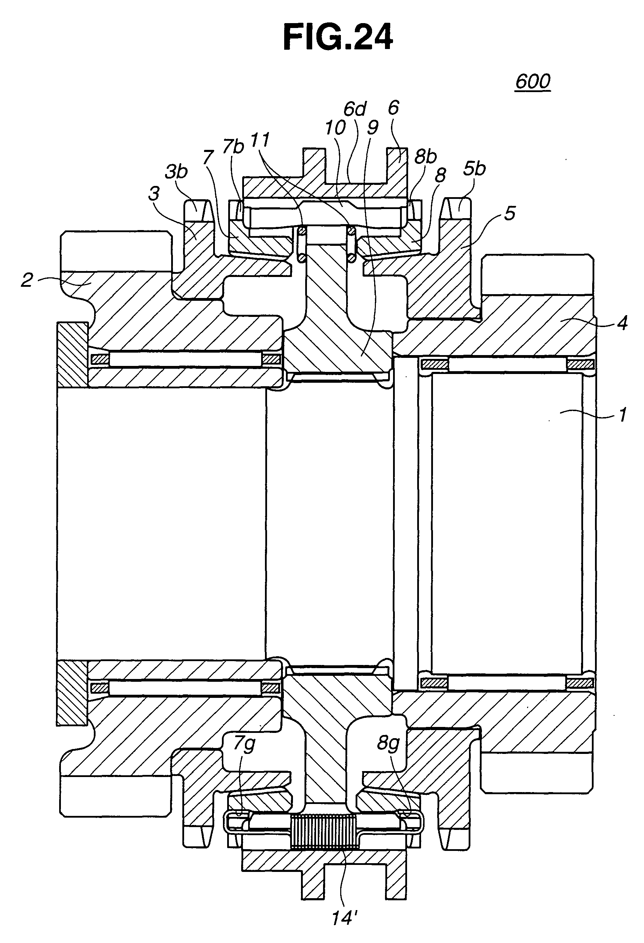

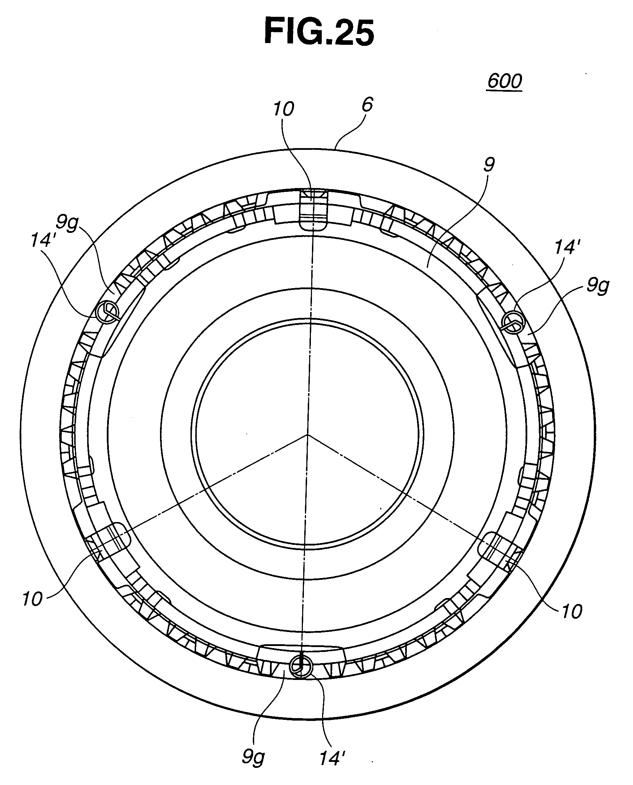

Referring to Figs. 24 and 25, there is shown a synchromesh mechanism 600 employed in a sixth embodiment of the present invention.

The synchromesh mechanism 600 is substantially the same as the above-mentioned first embodiment 100 except the return mechanism.

That is, this sixth embodiment 600 employs a synchronizing support force generating mechanism that is the same as that of the first embodiment 100. However, a return mechanism employed in this sixth embodiment 600 is different from that of the first embodiment 100.

That is, as is seen from Fig. 24, the return mechanism of this sixth embodiment 600 comprises three equally spaced return springs 14' which are arranged between first and second balk rings 7 and 8.

As is understood from Fig. 24, each of first and second balk rings 7 and 8 has at three equally spaced portions thereof respective hook holes 7g or 8g for catching ends of the corresponding return spring 14'.

Furthermore, as is seen from Fig. 25, synchronizing hub 9 has at three equally spaced portions thereof respective openings 9g for passing therethrough the return springs 14'. As shown, each opening 9g is positioned in the middle between the neighboring two insert keys 10.

In synchromesh mechanisms 500 and 600 described hereinabove, due to work of the return springs 14 and 14', when coupling sleeve 6 is in its neutral position or when coupling sleeve 6 is fully meshed with first clutch gear 3 or second clutch gear 5, first and second balk rings 7 and 8 are returned to their rest positions. That is, due to the force of the return springs 14 and 14, the balk ring cone surfaces 7a or 8a is separated from clutch gear cone surface 3a or 5a.

Inventors consider that the synchromesh mechanism 600 employed in the sixth embodiment provides a best combination between the synchronizing support force generating mechanism and the return mechanism.

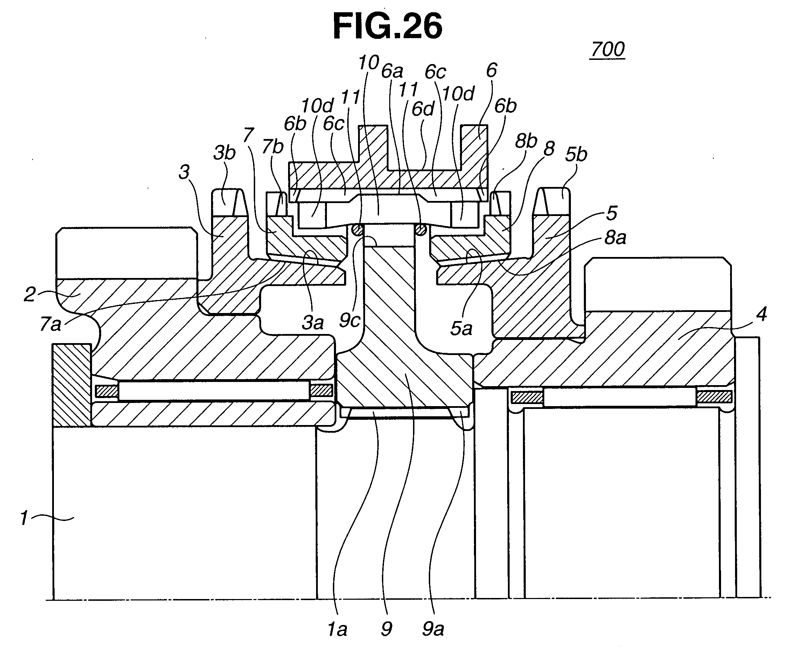

Referring to Figs. 26, 27A, 27B, 28 and 29, there is shown a synchromesh mechanism 700 employed in a seventh embodiment of the present invention.

In the synchromesh mechanism 700, the synchronizing support force generating mechanism is arranged between each of first and second balk rings 7 and 8 and each of insert keys 10.

As has been mentioned hereinabove, three insert keys 10 are supported by three key grooves 6a formed on the cylindrical inner surface of coupling sleeve 6.

In the synchromesh mechanism 700 of the seventh embodiment, when, upon generation of a frictional torque between first or second balk ring cone surface 7a or 8a and first or second clutch gear cone surface 3a or 5a, there is produced a relative rotation between each of the insert keys 10 and first or second balk ring 7 or 8, the synchronizing support force generating mechanism converts the circumferential force induced by the relative rotation to an axially applied synchronizing support force "Fa" by which balk ring 7 or 8 is pressed toward the corresponding clutch gear 3 or 5.

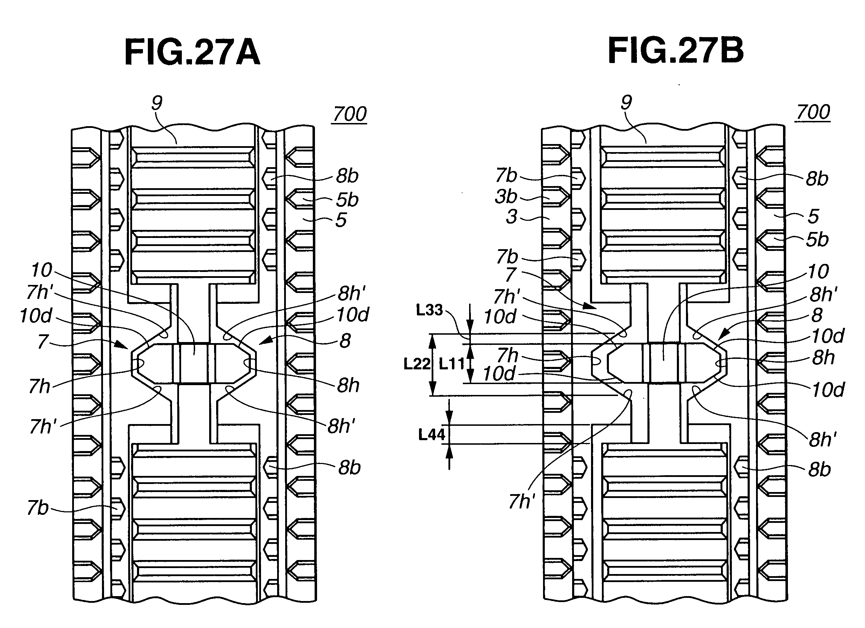

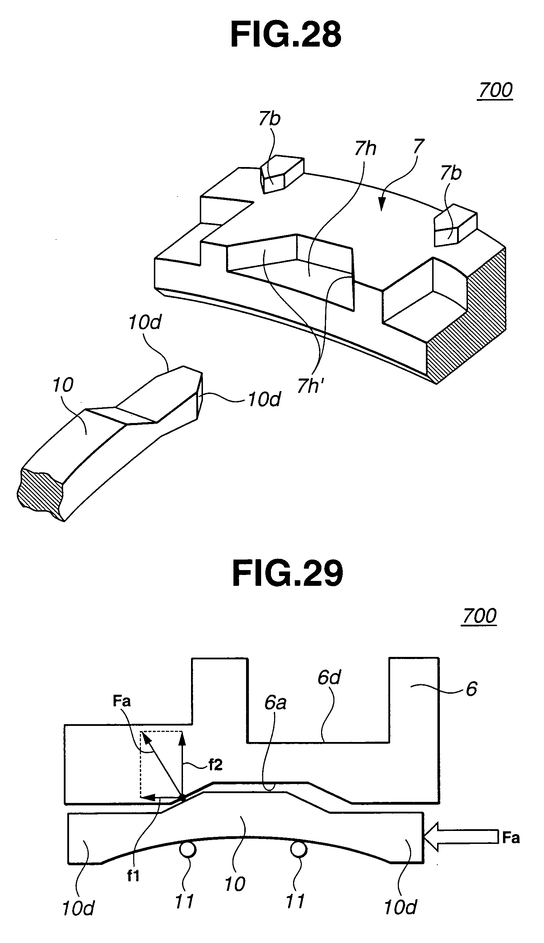

As is seen from Figs. 27A, 27B and 28, each of first and second balk rings 7 and 8 is formed with three equally spaced trapezoidal recesses 7h or 8h each having two inclined surfaces 7h' or 8h'.

As is seen from Fig. 28, each of insert keys 10 has axially both ends each having two inclined surfaces 10d.

That is, when the relative rotation takes place between each of insert keys 10 and first or second balk ring 7 or 8 for the reason as mentioned hereinabove, one of the inclined surfaces 10d of each insert key 10 is brought into intimate contact with the corresponding inclined surface 7h' or 8h' of first or second balk ring 7 or 8. Due to the intimate contact, a synchronizing support force "Fa" is produced.

As is seen from Fig. 29, the synchronizing support force "Fa" received by each insert key 10 is supported by an intimately contacting point between each insert key 10 and an inclined surface defined by each of key grooves 6a of coupling sleeve 6.

As will be understood from Figs. 27A and 27B, in the seventh embodiment 700, the following inequalities are established.

$$L22 > L11 \qquad (6)$$

wherein:

L11: width of insert key 10.
L22: circumferential length of each trapezoidal recess 7h (or 8h) of first or second balk ring 7 or 8.

$$L44 > L33 \qquad (7)$$

wherein:

L33: circumferential length of a space defined between first or second balk ring 7 or 8 and each insert key 10 under a neutral condition.
L44: index distance under neutral condition.

Although not shown in the drawings, the synchromesh mechanism 700 has a return mechanism that is substantially the same as the return mechanism arranged in the above-mentioned first embodiment 100.

In the following, the synchronizing operation of the seventh embodiment 700 will be described with reference to the drawings.

As is understood from Fig. 26, when, due to shifting of coupling sleeve 6, each of the insert keys 10 carried by coupling sleeve 6 is inserted into the corresponding trapezoidal recess 7h (see Fig. 28) of first balk ring 7 and first balk ring cone surface 7a is brought into contact with first gear cone surface 3a, the synchronizing operation starts.

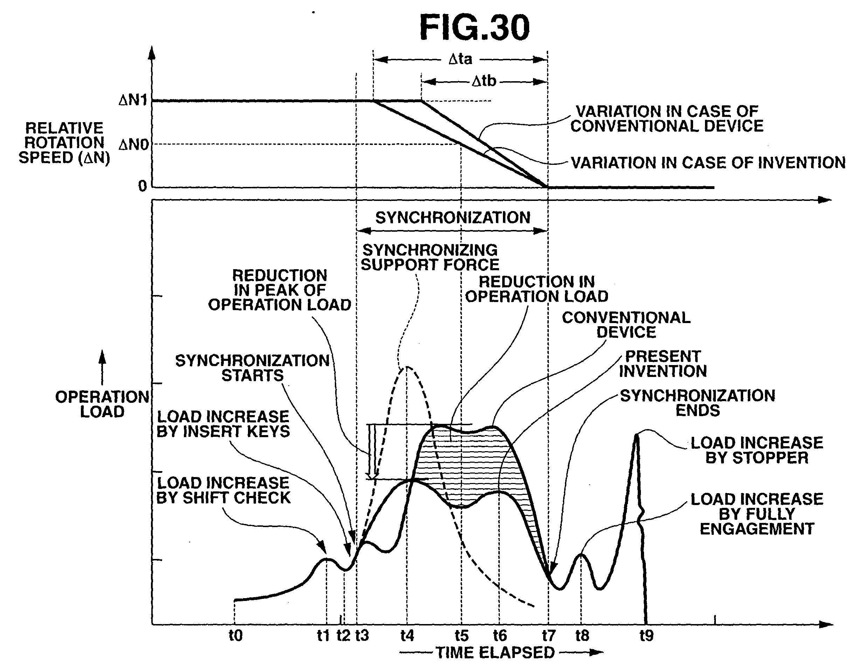

As is seen from the time chart of Fig. 30, at time "t3", the synchronizing operation starts.

Upon starting of the synchronizing operation, there is produced the friction torque between the two cone surfaces 7a and 3a. With this, there is produced a slight relative rotation between first balk ring 7 and each of insert keys 10 inducing an index condition wherein, as is understood from Fig. 28, one inclined surface 10d of each insert key 10 is in contact with one of the inclined surface 7h' of the recess 7h of first balk ring 7. A circumferential force produced by the contact between the inclined surface 10d of insert key 10 and the inclined surface 7h' of first balk ring 7 is converted to an axially applying force that is axially applied to first balk ring 7 as the synchronizing support force "Fa".

As is seen from the time chart of Fig. 30, the synchronizing support force "Fa" shows a peaked characteristic in a range from time "t3" to time "t5". Due to generation of such synchronizing support force "Fa", there is produced a frictional torque between first balk ring cone surface 7a and first clutch gear cone surface 3a, and a relative rotation speed "ΔN" between transmission rotation shaft 1 (viz., synchronizing hub 9) and first gear 2 (viz., first clutch gear 3) reduces from an initial value "ΔN1" to a value "ΔN0". This synchronization operation is carried out between each insert key 10 and first balk ring 7, and a counterforce of the synchronizing support force "Fa" is received by coupling sleeve 6 through key groove 6a of the same.

Thus, as is seen from Fig. 29, the counterforce of the force "Fa" is divided into an axial component force "f1" and a circumferential component force "f2". Accordingly, an operation load applied to coupling sleeve 6 against the synchronizing support force "Fa" is reduced to the value of "f1". That is, although the synchronizing support force "Fa" produced brings about a slight increase of the operation load needed for the shifting, the force "Fa" can support the load needed for the shift operation.

That is, in the seventh embodiment 700, the synchronizing support force used for reducing the relative rotation speed "ΔN" from the value "ΔN1" to the value "ΔN0" is compensated by the synchronizing support force "Fa" that is produced by the intimate contact between each insert key 10 and first balk ring 7 (or second balk ring 8), and the counterforce of the synchronizing support force "Fa" applied to coupling sleeve 6 is small like the axial component force "f1" (see Fig. 29). Accordingly, as is seen from the time chart of Fig. 30, in the seventh embodiment 700, the synchronizing support force "Fa" shows a double-peaked characteristic in the range from time "t3" to time "t7".

Accordingly, as is seen from the time chart, generation of the operation load starts at a time just behind time "t3" and ends at the time "t7". That is, the operation load is kept generated in a period "Δta" that is longer than "Δtb" that represents a period of the conventional mechanism. Thus, as compared with the conventional mechanism, the peak value of the operation load is low as is seen from the time chart. Accordingly, for powering the synchromesh mechanism of the seventh embodiment 700, a lower power electric actuator can be used.

In the seventh embodiment 700, the following advantages are obtained.

Because of the above-mentioned construction of the synchromesh mechanism 700, the operation load exerted during the synchronization can be effectively lowered. Thus, if the mechanism 700 is used in a manual transmission, the shift lever moving force can be reduced, and if the mechanism 700 is used in an automatic transmission, a lower power, smaller sized and low cost electric actuator can be used.

Due to provision of the return mechanism, when coupling sleeve 6 comes to its neutral position and/or when coupling sleeve 6 is completely engaged with first clutch gear 3 or second clutch gear 5, first balk ring 7 or second balk ring 8 is returned the initial position separating the balk ring cone surface 7a or 8a from clutch gear cone surface 3a or 5a. Accordingly, the cone surfaces 7a, 8a, 3a and 5a are suppressed from suffering wearing in their rest condition.

Because the insert keys 10 are used as a part of the synchronizing support force generating mechanism, the number of elements and parts that are used for constituting the synchronizing support force generating mechanism can be reduced.

The entire contents of Japanese Patent Applications 2003-329003 (as filed September 19, 2003) and 2004-135994 (as filed April 30, 2004) are incorporated herein by reference.

Although the invention has been described above with reference to the embodiments of the invention, the invention is not limited to such embodiments as described above. Various modifications and variations of such embodiments may be carried out by those skilled in the art, in light of the above description.

## Claims

1. An automotive power transmission with a synchromesh mechanism, comprising:

   a transmission rotation shaft (1);
   a synchronizing hub (9) coaxially disposed about the transmission rotation shaft (1) through a spline connection, thereby to rotate therewith about an axis of the transmission rotation shaft (1);
   a coupling sleeve (6) coaxially disposed about the synchronizing hub (9) through a spline connection, thereby to rotate therewith about the axis of the transmission rotation shaft (1);
   a speed gear (2) rotatably disposed about the transmission rotation shaft (1);
   a clutch gear (3) tightly and coaxially disposed on the speed gear (2) to rotate therewith, clutch gear (3) having a clutch gear cone surface (3a);
   a balk ring (7) arranged between the clutch gear (3) and the coupling sleeve (6), the balk ring (7) having a balk ring cone surface (7a) that is intimately contactable with the clutch gear cone surface (3a), the balk ring having key grooves (7c, 7h);

insert keys (10) held by the coupling sleeve (6) to move therewith, each insert key (10) having one end that is engaged with one of the key grooves (7c, 7h) of the balk ring (7) to induce an integral rotation of the coupling sleeve (6) with the balk ring (7) when the coupling sleeve (6) is axially shifted toward the balk ring (7); and a synchronizing support force generating mechanism that induces a relative rotation between the synchronizing hub (9) and the balk ring (7) when, upon shifting of the coupling sleeve (6) toward the balk ring (7), the balk ring cone surface (7a) becomes in frictional contact with the clutch gear cone surface (3a) to produce a friction torque, and converts a circumferential force produced as a result of the relative rotation between the synchronizing hub (9) and the balk ring (7) to an axially applied synchronizing support force (Fa) with which the balk ring (7) is pressed against the clutch gear (3).

2. An automotive power transmission as claimed in Claim 1, further comprising a return mechanism that forces the balk ring (7) to return to its rest position separating the balk ring cone surface (7a) from the clutch gear cone surface (3a) when the coupling sleeve (6) is returned to its neutral position or spline teeth (6c) of the coupling sleeve (6) are fully engaged with spline teeth (3b) of the clutch gear (3).

3. An automotive power transmission as claimed in Claim 1 or 2, in which the synchronizing support force generating mechanism comprises:

   a first cam surface (7d) provided by one of the balk ring (7) and the synchronizing hub (9); and a second cam surface (9d) provided by the other one of the balk ring (7) and the synchronizing hub (9),

   wherein the first and second inclined surfaces (7d, 9d) are brought into contact when the relative rotation takes place between the synchronizing hub (9) and the balk ring (7).

4. An automotive power transmission as claimed in Claim 3, in which the first cam surface (7d) is provided by the balk ring (7) and arranged beside one of the key grooves (7c) of balk ring (7), and the second cam surface (9d) is provided by the synchronizing hub (9) and arranged beside one of key grooves (9c) provided by the synchronizing hub (9), the key grooves (9c) of the synchronizing hub (9) being constructed to axially slidably receive the insert keys (10) respectively.

5. An automotive power transmission as claimed in Claim 3, in which the first cam surface is formed on an outer surface of a projection (7x) formed on one of the balk ring (7) and the synchronizing hub (9), and the second cam surface is formed on an inner surface of a recess (9y) formed in the other one of the balk ring (7) and the synchronizing hub (9), the projection (7x) being inserted into the recess (9y) when the coupling sleeve (6) is axially shifted toward the balk ring (7).

6. An automotive power transmission as claimed in Claim 5, in which each of the first and second cam surfaces is an inclined flat surface that defines a predetermined angle relative to an imaginary plane perpendicular to the axis of the transmission rotation shaft (1).

7. An automotive power transmission as claimed in Claim 5, in which each of the first and second cam surfaces is a rounded surface.

8. An automotive power transmission as claimed in 1 or 2, in which the synchronizing support force generating mechanism comprises:

   trapezoidal projections (7p) provided by one of the balk ring (7) and the synchronizing hub (9), each trapezoidal projection (7p) having two cam surfaces (7d') at shoulder portions thereof; and trapezoidal recesses (9p) provided by the other one of the balk ring (7) and the synchronizing hub (9), each trapezoidal recess (9p) having two cam surfaces (9d"),

   wherein one of the two cam surfaces (7d') is brought into contact with one of the cam surfaces (9d") when the relative rotation takes place between the synchronizing hub (9) and the balk ring (7).

9. An automotive power transmission as claimed in Claim 1 or 2, in which the synchronizing support force generating mechanism comprises:

   semi-circular recesses (17a) provided by one of the balk ring (7) and the synchronizing hub (9), each semi-circular recess (17a) having a rounded inner surface; and semi-circular projections (18a) provided by the other one of the balk ring (7) and the synchronizing hub (9), each semi-circular projection (18a) having a rounded outer surface,

   wherein the rounded outer surface of each semi-circular projection (18a) is brought into contact with the rounded inner surface of the corresponding semi-circular recess (17a) when the relative rotation takes place between the synchronizing hub (9) and the balk ring (7).

10. An automotive power transmission as claimed in Claim 1 or 2, in which the synchronizing support force generating mechanism comprises:

pin members (15) provided by one of the balk ring (7) and the synchronizing hub (9), each pin member (15) having a conical head (15d); and recesses (7f, 7ff) provided by the other one of the balk ring (7) and the synchronizing hub (9), each recess being sized to receive the conical head of the pin member,

wherein the conical head of each pin member is brought into contact with a wall surface of the corresponding recess when the relative rotation takes place between the synchronizing hub (9) and the balk ring (7).

11. An automotive power transmission as claimed in Claim 10, in which each of the recesses is a trapezoidal recess (7f) with inclined opposed surfaces (7f').

12. An automotive power transmission as claimed in Claim 10, in which each of the recesses is a semi-circular recess (7ff).

13. An automotive power transmission as claimed in Claim 1 or 2, in which the synchronizing support force generating mechanism comprises:

inclined side surfaces (7h') of each key groove (7h) of the balk ring (7); and
one axial end of each insert key (10), the axial end having two inclined surfaces (19d),

wherein one of the inclined surfaces (19d) of the insert key (10) is brought into contact with one of the inclined surfaces of the key groove (7h) when the relative rotation takes place between the synchronizing hub (9) and the balk ring (7).

14. An automotive power transmission as claimed in one of Claims 2 to 13, in which the return mechanism comprises:

an annular recess (9e) formed on an inner surface of the synchronizing hub (9), the annular recess having an inclined bottom surface;
return keys (12) engageable with the annular recess (9e); and
an annular spring (13) biasing the return keys (12) radially outward toward the annular recess (9e); and
an annular spring groove (7e) formed on the balk ring (7) to receive the annular ring (13).

15. An automotive power transmission as claimed in one of Claims 2 to 13, in which the return mechanism comprises:

coil springs (16) arranged between the synchronizing hub (9) and the balk ring (7), each coil spring (16) biasing the balk ring (7) toward the rest position when the coupling sleeve (6) is returned to its neutral position or the spline teeth (6c) of the coupling sleeve (6) are fully engaged with the spline teeth (3b) of the clutch gear (3).

16. An automotive power transmission as claimed in one of Claims 2 to 13, in which the return mechanism comprises:

return springs (14, 14') each having one end hooked to the balk ring (7) and the other end hooked to another balk ring (8) that is arranged at a side opposite to the balk ring (7) with respect to the synchronizing hub (9).

17. An automotive power transmission as claimed in Claim 16, in which each return spring (14') is arranged to pass through an opening (9g) formed in the synchronizing hub (9).

18. An automotive power transmission with a synchromesh mechanism, comprising:

a transmission rotation shaft (1);
a synchronizing hub (9) coaxially disposed about the transmission rotation shaft (1) through a spline connection, thereby rotate therewith about an axis of the transmission rotation shaft (1);
a coupling sleeve (6) coaxially disposed about the synchronizing hub (9) through a spline connection, thereby rotate therewith about the axis of the transmission rotation shaft (1);
a speed gear (2) rotatably disposed about the transmission rotation shaft (1);
a clutch gear (3) tightly and coaxially disposed on the speed gear (2) to rotate therewith, clutch gear (3) having a clutch gear cone surface (3a);
a balk ring (7) arranged between the clutch gear (3) and the coupling sleeve (6), the balk ring (7) having a balk ring cone surface (7a) that is intimately contactable with the clutch gear cone surface (3a), the balk ring having key grooves (7c, 7h);
insert keys (10) held by the coupling sleeve (6) to move therewith, each insert key (10) having one end that is engaged with one of the key grooves (7c, 7h) of the balk ring (7) to induce an integral rotation of the coupling sleeve (6) with the balk ring (7) when the coupling sleeve (6) is axially shifted toward the balk ring (7);

a synchronizing support force generating mechanism that induces a relative rotation between the synchronizing hub (9) and the balk ring (7) when, upon shifting of the coupling sleeve (6) toward the balk ring (7), the balk ring cone surface (7a) is brought into frictional contact with the clutch gear cone surface (3a) to produce a friction torque therebetween, and converts a circumferential force produced as a result of the relative rotation between the synchronizing hub (9) and the balk ring (7) to an axially applied synchronizing support force (Fa) with which the balk ring (7) is pressed against the clutch gear (3); and

a return mechanism that forces the balk ring (7) to return to a rest position separating the balk ring cone surface (7a) from the clutch gear cone surface (3a) when the coupling sleeve (6) is returned to its neutral position or spline teeth (6c) of the coupling sleeve (6) are fully engaged with spline teeth (3b) of the clutch gear (3).

# FIG.1

*100*

# FIG.2

*100*

# FIG.3A

# FIG.3B

# FIG.4A

# FIG.4B

**FIG.5A**

7d

_100_

7x

7

7x

7x

7d

L1

7e

**FIG.5C**

_100_

8

8b

12

13

**FIG.5B**

_100_

9

9b

10

9d

9d

9y

9c

9d''

9d

L2

8e

9d''

# FIG.6

RELATIVE ROTATION SPEED ($\Delta N$)

$\Delta N1$

$\Delta N0$

0

VARIATION BY MECHANICAL SYNCHRONIZATION

VARIATION BY COUPLING SLEEVE

SYNCHRONIZATION

SYNCHRONIZING SUPPORT FORCE

REDUCTION IN PEAK OF OPERATION LOAD

REDUCTION IN OPERATION LOAD

CONVENTIONAL DEVICE

OPERATION LOAD

SYNCHRONIZATION STARTS

PRESENT INVENTION

SYNCHRONIZATION ENDS

LOAD INCREASE BY INSERT KEYS

LOAD INCREASE BY STOPPER

LOAD INCREASE BY SHIFT CHECK

LOAD INCREASE BY FULLY ENGAGEMENT

t0  t1 t2 t3  t4  t5  t6  t7  t8  t9

TIME ELAPSED →

# FIG.7A

_100_

LOWER
SPEED

7B

_9d_

_9c_

HIGHER
SPEED

_7d_

_7c_

_10_

_7d_

_9_

_7e_

_9d_

# FIG.7B

_100_

_7_   _9_

_9d_

_7d_

Fa

Fb

F

# FIG.8

200

# FIG.9

200

# FIG.10A

*200*

# FIG.10B

*200*

# FIG.11A

_200_

# FIG.11B

_200_

# FIG.12

*200*

*12*

*13*

*7*

*7b*

*7P*

*7d'*

*9*

*9d''*

*9d''*

*7e*

*9P*

*7d'*

# FIG.13A

# FIG.13B

# FIG.14

EP 1 517 064 A2

# FIG.15A

*9*  ·  *300*

*7b*
*3b*
*3*
*17a'*
*18a*
*7*
*7b*

*8b*
*5b*
*5*
*18a'*
*17a*
*8*
*8b*

L3'

# FIG.15B

*9*  ·  *300*

*7b*
*3b*
*3*
*7b*
*7*
*18a*
*17a'*
*L1'*

*8b*
*5b*
*5*
*18a'*
**CENTER OF 18a'**
*L2'*
**CENTER OF 17a'**
*17a'*
*8*
*8b*

L4'

EP 1 517 064 A2

# FIG.16

EP 1 517 064 A2

# FIG.17

400

EP 1 517 064 A2

**FIG.18A**

**FIG.18B**

# FIG.19

<u>400</u>

7b

7f

7b

7

7f'

15

15d

# FIG.20

7b

7ff

7b

7

7ff'

15

15d

# FIG.21

# FIG.22A

*500*

7 7b

7P 7d' 7P 7X 7d' 7P

# FIG.22B

*500*

7 7c 7c 7d' 7P 7d' 7d' 7P 7d' 7c

EP 1 517 064 A2

**FIG.23A**

**FIG.23B**

# FIG.24

# FIG.25

# FIG.26

EP 1 517 064 A2

# FIG.27A

9
700
8b
5b
5
10
7h'
10d
7
8h'
10d
8
8h
7h
8h
7h'
8h'
7b
8b

# FIG.27B

9
700
7b
3b
3
5
5b
7b
7
10
7h'
8h'
10d
8
L33
10d
L22 L11
7h
8h
10d
8h
10d
7h'
8h'
8b

EP 1 517 064 A2

# FIG.28

*700*

# FIG.29

*700*

# FIG.30

RELATIVE ROTATION SPEED ($\Delta N$)

$\Delta ta$

$\Delta tb$

$\Delta N1$

$\Delta N0$

0

VARIATION IN CASE OF CONVENTIONAL DEVICE

VARIATION IN CASE OF INVENTION

SYNCHRONIZATION

SYNCHRONIZING SUPPORT FORCE

REDUCTION IN PEAK OF OPERATION LOAD

REDUCTION IN OPERATION LOAD

CONVENTIONAL DEVICE

SYNCHRONIZATION STARTS

PRESENT INVENTION

OPERATION LOAD

SYNCHRONIZATION ENDS

LOAD INCREASE BY INSERT KEYS

LOAD INCREASE BY STOPPER

LOAD INCREASE BY SHIFT CHECK

LOAD INCREASE BY FULLY ENGAGEMENT

t0  t1 t2 t3  t4  t5 t6  t7 t8  t9

TIME ELAPSED

EP 1 517 064 A2